(19) Europäisches Patentamt
European Patent Office
Office européen des brevets

(11) **EP 3 056 379 B1**

(12) **EUROPÄISCHE PATENTSCHRIFT**

(45) Veröffentlichungstag und Bekanntmachung des Hinweises auf die Patenterteilung:
**04.10.2023 Patentblatt 2023/40**

(21) Anmeldenummer: **15197667.7**

(22) Anmeldetag: **02.12.2015**

(51) Internationale Patentklassifikation (IPC):
**B60M 3/00** *(2006.01)* **B61L 27/16** *(2022.01)*
**B61L 27/33** *(2022.01)* **H02J 3/14** *(2006.01)*

(52) Gemeinsame Patentklassifikation (CPC):
**B60M 3/00; B61L 27/16; B61L 27/33; H02J 3/14;**
H02J 2310/40; Y02B 70/3225; Y04S 20/222

(54) **VERFAHREN ZUR STEUERUNG ODER REGELUNG EINER BETRIEBSVORRICHTUNG**

METHOD FOR CONTROLLING OR REGULATING AN OPERATING DEVICE

PROCEDE DE COMMANDE OU DE REGLAGE D'UN DISPOSITIF D'ACTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2015 EP 15154461**

(43) Veröffentlichungstag der Anmeldung:
**17.08.2016 Patentblatt 2016/33**

(73) Patentinhaber: **Schweizerische Bundesbahnen SBB**
**3000 Bern (CH)**

(72) Erfinder: **BOSCH, Julius**
**4600 Olten (CH)**

(74) Vertreter: **Rutz & Partner**
**Alpenstrasse 14**
**Postfach 7627**
**6304 Zug (CH)**

(56) Entgegenhaltungen:
EP-A1- 0 997 340      EP-A1- 1 359 049
EP-A1- 2 505 416      EP-A1- 2 799 307
DE-A1-102005 056 084  DE-A1-102012 103 081
GB-A- 2 516 383       JP-A- H0 516 808
JP-A- H0 834 268

## Beschreibung

Die Erfindung betrifft ein Verfahren zur Steuerung oder Regelung einer Betriebsvorrichtung, insbesondere einer Eisenbahnanlage und/oder des damit verbundener Energieversorgungssystems sowie eine nach diesem Verfahren arbeitende Betriebsvorrichtung, wie eine Eisenbahnanlage.

In [1], J. Bosch, J.M. Aniceto, Potenziale für das Lastmanagement im Bahnenergiesystem, eb - Elektrische Bahnen, Ausgabe 2, 2013, ist beschrieben, dass die zeitliche Überlagerung von Traktionsleistungen in der Energieversorgung von Eisenbahnanlagen zu erheblichen Lastschwankungen führer kann. Zur Deckung dieser Lastspitzen ist die erforderliche Erzeugungsleistung, die durch die maximale Lastspitze und eine Reserve definiert wird, aus Kraftwerken gegebenenfalls über Frequenzumformer bereitzustellen. Die zukünftige Zunahme der Lastspitzen erfordert folglich Investitionen in den Ausbau des Energieversorgungssystems. Energie für Spitzenlasten, die durch schnell regelbare Spitzenlastkraftwerke bereitgestellt wird, ist zudem teurer, weshalb Lastspitzen durch ein geeignetes Lastmanagement vorzugsweise vermieden werden.

[2], J. Bosch, Frequenzkomponenten des Bahnstromlastgangs - Zusammenhänge mit dem Bahnbetrieb, eb - Elektrische Bahnen, Ausgabe 4, 2014, zeigt einen täglichen Verlauf der Gesamtlast im Betriebsnetz bzw. Bahnstromnetz der Schweizerischen Bundesbahnen, der in den Zeitbereichen um 08:00 Uhr und 18:00 Uhr Lastspitzen aufweist. Weiter sind Frequenzkomponenten dies Lastverlaufs gezeigt, die durch eine Fourier-Transformation des Lastverlaufs ermittelt werden können. Es ist gezeigt, dass aufgrund des eingeführten Taktfahrplans signifikante Laständerungen mit einer Periodendauer von 1 Minute und 30 Minuten auftreten. Lastspitzen treten daher insbesondere zu den Zeiten auf, an denen die verschiedenen sich periodisch ändernden Laständerungen gleichzeitig einen Maximalwert aufweisen.

In [1] ist weiter beschrieben, dass zur Vermeidung von Lastspitzen nicht zwingend benötigte Lasten abgeschaltet werden, sodass der Bahnbetrieb weitergeführt werden kann. Dabei können Lastabschaltungen dezentral oder zentral gesteuert werden. Beim dezentralen Ansatz wird der lokale Leistungsbezug eines jeden Fahrzeuges optimiert, indem zu Zeiten hohen Traktionsleistungsbedarfs des betreffenden Fahrzeugs die Heizleistung für den Innenraum reduziert wird. Beim zentralen Ansatz werden die Lastspitzen zentral erkannt und Abschaltsignale an die Lasten gesendet. Damit könnten alle teilnehmenden Lasten gleichzeitig für das Lastmanagement verwendet werden. Zur Kommunikation können teilweise bereits vorhandene Kommunikationsstrecken erweitert und genutzt werden. Bei der zentralen Steuerung werden nicht zwingend benötigte Lasten zu Tageszeiten, in denen die Lastspitzen auftreten, abgeschaltet, z.B. von 7:00 Uhr bis 9:00 Uhr und von 14:00 Uhr bis 22:00 Uhr. Lastabschaltungen erfolgen daher über grössere Zeitperioden, in denen ein grösseres Lastaufkommen erwartet wird.

Bei der Abschaltung von Lasten, z.B. Heizsystemen, über eine längere Zeitdauer treten jedoch Komforteinbussen für Passagiere und gegebenenfalls Funktionsbeeinträchtigungen auf. Zudem ist es möglich, dass Lasten nicht notwendigerweise abgeschaltet werden, da sich im Nachhinein herausstellt, dass das Lastaufkommen geringer war als erwartet. Weiterhin können überraschenderweise vereinzelt Lastspitzen ausserhalb der Zeitbereiche auftreten, in denen die Lastabschaltung vorgesehen ist. Diese Lastspitzen werden durch das Lastmanagement daher nicht erfasst und können zu Instabilitäten im Betriebsnetz der Betriebsvorrichtung führen.

[3], EP2505416A1, offenbart ein Verfahren zur Bereitstellung elektrischer Energie für eine Eisenbahnanlage, umfassend das Ermitteln der aktuell fahrenden Schienenfahrzeuge und deren Fahrparameter; Ermitteln des Lastzustandes im Betriebsnetz der Eisenbahnanlage; Anheben der Geschwindigkeit mindestens eines Schienenfahrzeugs über eine fahrplanmässig vorgesehene Reisegeschwindigkeit im Falle einer unterhalb eines Lastoptimums gelegenen Lastzustandes und Absenken der Geschwindigkeit mindestens eines Schienenfahrzeugs zur rekuperativen Einspeisung von elektrischer Energie im Falle eines oberhalb eines Lastoptimums gelegenen Lastzustandes.

Dieses Verfahren basiert auf der Messung des aktuellen Lastzustandes und ermöglicht daher nur sehr kurzfristige korrektive Eingriffe in die Eisenbahnanlage. Zudem ist die Wirkung der Korrekturmassnahmen, die bei einer Überlastung des Betriebsnetzes erfolgen, eher gering. Kurzfristige Eingriffe in das Fahrverhalten der verkehrenden Eisenbahnen sind zudem eher unerwünscht.

[4], EP2799307A1, offenbart eine Steuerungsvorrichtung, mittels der eine Gruppe von Eisenbahnzügen, die in einer Eisenbahnanlage verkehren, in Abhängigkeit von Zugdiagrammen und einer vorgegebenen maximalen Leistungsaufnahme derart gesteuert wird, dass die aktuelle Leistungsaufnahme unterhalb der vorgegebenen maximalen Leistungsaufnahme liegt. Dazu erstellt die Steuervorrichtung anhand der Zugdiagramme und der daraus resultierenden Zuglaufpläne einen Energiebedarfsplan und ermittelt Lastwerte, welche die vorgegebene maximale Leistungsaufnahme überschreiten.

Dieses Verfahren ist mit einem grossen Aufwand verbunden, da die Belastungen für alle auftretenden Kombinationen der Einzelbelastungen der Fahrzeuge über den gesamten Tagesablauf errechnet werden müssen. Bei allen Fahrplanänderungen müssen die Berechnungen erneut durchgeführt werden, wobei diese Berechnungen stets auf Annahmen beruhen, die oft von der Realität abweichen.

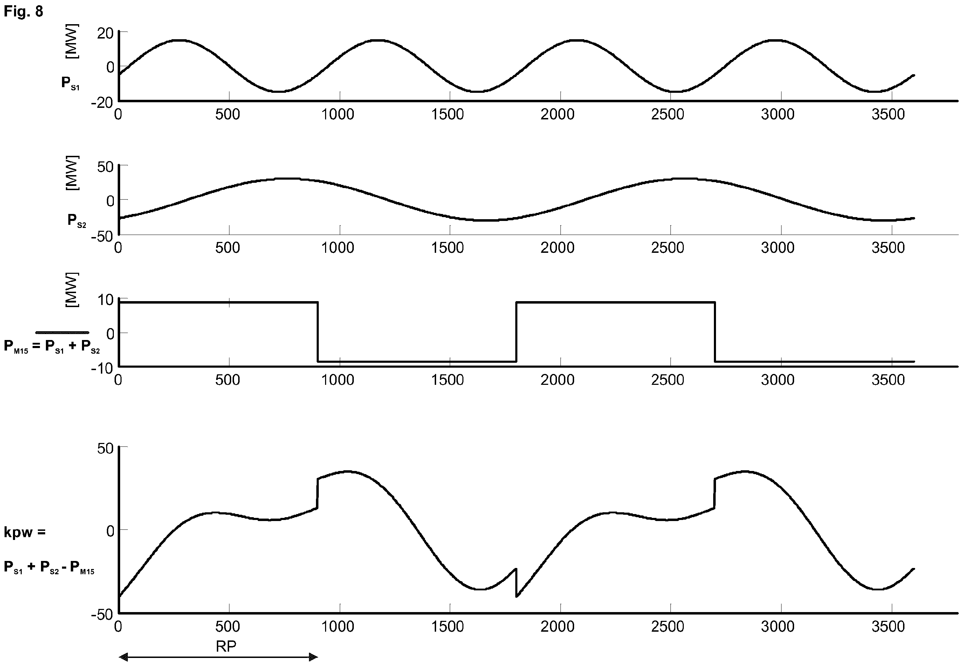

[5], JPH0516808, offenbart ein Managementsystem für ein Unterwerk des Betriebsnetzes einer Eisenbahnanlage, dem ein Streckenabschnitt zugeordnet ist, auf dem mehrere Eisenbahnzüge verkehren können. Mittels des Managementsystems sollen Zugfahrpläne unter Berücksichtigung von Verspätungen einzelner Eisenbahnzüge geändert werden, um Netzüberlastungen innerhalb des Streckenabschnitts zu vermeiden. Sofern sich einzelne Eisenbahnzüge verspäteten kann innerhalb des Streckenabschnitts eine signifikante Erhöhung der Fahrzeugdichte auftreten. Falls sich Eisenbahnzüge mit früheren Abfahrtszeiten verspäteten und nachfolgende Eisenbahnzüge pünktlich fahren können z.B. anstelle von drei Eisenbahnzügen z.B. sieben bis acht Eisenbahnzüge in diesem Streckenabschnitt gleichzeitig auftreten (siehe Figur 8). In den Zeiten, in denen durch Zugverspätungen höhere Fahrzeugdichten auftreten, erhöht sich die Belastung des Unterwerks, weshalb die Verzögerungen mittels Fuzzy-Logik ermittelt und in Erwartung höherer Fahrzeugdichten Fahrplanänderungen vorgenommen werden.

Basierend auf der Tatsache, dass der Leistungsbedarf bei der Fahrt eines Eisenbahnzuges durch einen Streckenabschnitt wesentlich von den eingeleiteten Beschleunigungen abhängt wird in [6], JPH0834268A, ein Verfahren zur verbesserten Voraussage der Belastung eines Betriebsnetzes einer Eisenbahnanlage vorgeschlagen. Dazu werden die Fahrplandaten und die Eigenschaften jedes einzelnen Zuges von einer ersten Einheit, die Verkehrsdaten berechnet, an eine zweite Einheit übergeben, die für eine folgende Zeitspanne die Verkehrswege und Beschleunigungen für jeden Zug berechnet. Anhand der Beschleunigungen der einzelnen Züge wird in einer dritten Einheit die zu erwartende Netzbelastung in einem Unterwerk ermittelt. Mit erheblichem Aufwand werden daher basierend auf der Ermittlung von Fahrplandaten und der Zustände und des Verhaltens der einzelnen Eisenbahnzüge zukünftige Belastungen nur für einen kleinen Abschnitt der Eisenbahnanlage ermittelt.

Die DE102005056084A1 offenbart ein Verfahren zur Kontrolle und zur Steuerung bereitzustellender elektrischer Energie sowie zur Harmonisierung der Belastungsstruktur eines Versorgungsnetzes durch Kommunikation zwischen Energieversorger und Energieverbraucher, die je ein lokales Energiemanagement-System mit Leistungserfassung, Lastspitzenbegrenzung und/oder prioritäts- oder bedarfsgesteuertem Lastabwurf aufweisen, mittels denen kontinuierlich Hochrechnungen über einen erwarteten Energieverbrauch in einer vorgegebenen Zeiteinheit durchführt und hieraus ein Last- und Energiereduzierungs- oder Zuschaltpotential bestimmt und einem Zentralrechner gemeldet werden.

Die EP1359049A1 offenbart ein Verfahren zur Messung der von Fahrzeugen aktuell benötigten Gesamtleistung und zur Steuerung der Fahrzeuge, um zu verhindern, dass die Gesamtleistung einen vorgesehenen Wert überschreitet.

Die GB2516383A offenbart ein Verfahren zur Aktualisierung von Fahrplänen und zur Bereitstellung von Energie, die aufgrund von Änderungen der Fahrpläne erforderlich ist.

Die DE102012103081A1 offenbart ein Verfahren zur Messung der Summe des Verbrauchs von elektrischer Leistung anhand einer Vielzahl von Messanordnungen, um den Verlauf des Verbrauchs von elektrischer Leistung zu bestimmen und Prognosen für die Zukunft zu erstellen.

Die EP0997340A1 offenbart Verfahren, bei dem in einem Eisenbahnnetz verkehrende Triebwagen den gewünschten zukünftigen Energiebezug an eine Zentrale melden, die anhand des gemeldeten Energiebedarfs der Triebwagen eine Vorhersage über den zukünftigen Energiebedarf erstellt.

Aus dem Stand der Technik sind somit Lösungen bekannt, bei denen Belastungen von Teilen des Stromnetzes einer Eisenbahnanlage anhand von Fahrplandaten und der Überwachung der Zustände und des Verhaltens der Eisenbahnzüge ermittelt werden. Dazu müssen mit erheblichem Aufwand, die Positionen der einzelnen Eisenbahnzüge, gegebenenfalls deren Verzögerungen gegenüber einem Fahrplan sowie die verbleibenden Distanzen und Beschleunigungen mit erheblichem Aufwand errechnet werden, um Korrektiv in Teile des Stromnetzes eingreifen zu können.

Der vorliegenden Erfindung liegt daher die Aufgabe zugrunde, ein verbessertes Verfahren zur Steuerung oder Regelung einer Betriebsvorrichtung, insbesondere einer Eisenbahnanlage, oder eines damit verbundenen Energieversorgungssystems sowie eine entsprechende Betriebsvorrichtung, gegebenenfalls eine Eisenbahnanlage, anzugeben, welche nach diesem Verfahren gesteuert oder geregelt wird.

Mittels des Verfahrens sollen die Betriebsvorrichtung und/oder das zugehörige Energieversorgungssystem derart steuerbar sein,

   A) dass Lastspitzen durch Abschaltung von Lasten gezielt vermieden oder durch Bereitstellung von Energie gezielt kompensiert werden können, und/oder
   B) dass die Belastung des Energieversorgungssystems zumindest über eine bestimmte Zeitspanne einen vereinbarten Wert nicht überschreitet.

Die erfindungsgemässe Betriebsvorrichtung, die ein Stromversorgungsnetz bzw. ein Betriebsnetz und damit gespeiste Betriebseinheiten aufweist, soll daher derart betrieben werden können, dass ein geglätteter Lastverlauf möglichst ohne Lastspitzen erreicht werden kann.

Ferner soll die erfindungsgemässe Betriebsvorrichtung derart betrieben werden können, dass vereinbarte Belastungen des Energieversorgungssystems durch eine möglichst präzise Regelung der Betriebsvorrichtung präzise eingehalten werden können, und der Betreiber der Betriebsvorrichtung seinen Energiebedarf durch Einhaltung der Verträge kostengünstig decken kann.

Alternativ soll der Betreiber des Energieversorgungssystems dieses bzw. die damit verbundenen Energieerzeuger entsprechend dem vorhergesehenen Lastverlauf der Betriebsvorrichtung präzise und einfach steuern können um die erforderliche Energie bereitzustellen.

Eingriffe in die Betriebsvorrichtung bzw. die Eisenbahnanlage und/oder in das zugehörige Energieversorgungsnetz sollen präzise vollzogen werden können, sodass unnötige Lastabschaltungen, die den Komfort der Anwender bzw. Passagiere beeinträchtigen oder die Bereitstellung nicht benötigter Energiereserven, vermieden werden können. Hingegen sollen auch zu beliebigen Zeitpunkten sporadisch auftretende Lastspitzen erfasst werden können, sodass die Stabilität des Betriebsnetzes der Betriebsvorrichtung bzw. der Eisenbahnanlage und die Stabilität des Energieversorgungsnetzes stets gewährleistet sind.

Mittels des erfindungsgemässen Verfahrens sollen insbesondere auch unvorhergesehene Veränderungen der Betriebsvorrichtung berücksichtigt werden können, die durch externe oder interne Einflüsse und Veränderungen verursacht werden, und gegebenenfalls unerwartete Lastspitzen verursachen.

Das erfindungsgemässe Verfahren soll zudem automatisch und mit geringem Aufwand durchführbar sein. Die Belastungen des Betriebsnetzes der Betriebsvorrichtung bzw. der Eisenbahnanlage sollen ohne die aufwendige Auswertung von Fahrplänen und Zuglaufdaten ermittelt werden können. Eine aufwändige Überarbeitung der ermittelten Daten bei einer Änderung der Fahrplandaten soll vermieden werden. Erfindungsgemäss sollen qualitativ hochwertige Daten zur Belastung des Betriebsnetzes während eines Tagesablaufs zur Verfügung gestellt werden, die insbesondere auch eine vorteilhafte Steuerung oder Regelung der Betriebsvorrichtung und/oder des Energieversorgungssystems ermöglichen.

Die erfindungsgemäss ermittelten Daten sollen zudem als zuverlässige Basis für zusätzliche Optimierungen dienen, die gegebenenfalls gefordert werden.

Diese Aufgabe wird mit einem Verfahren und einer Vorrichtung gelöst, welche die in Anspruch 1 bzw. 13 angegebenen Merkmale aufweisen. Vorteilhafte Ausgestaltungen der Erfindung sind in weiteren Ansprüchen angegeben.

Das Verfahren dient der Steuerung oder Regelung einer Betriebsvorrichtung oder eines damit verbundenen Energieversorgungssystems, insbesondere einer von einem Energieversorgungssystem gespeisten Eisenbahnanlage, zur Einhaltung eines erwünschten Lastverlaufs, insbesondere zur Vermeidung oder Kompensation von Lastspitzen.

Insbesondere dient das Verfahren der Überwachung, Prognose und Steuerung des Leistungsbedarfs der Betriebsvorrichtung bzw. der Eisenbahnanlage.

Dazu weist die Betriebsvorrichtung einen Lastrechner auf, dem die Daten des Verlaufs der in der Betriebsvorrichtung auftretenden Gesamtlast zugeführt werden. Der Lastrechner ermittelt aus dem Verlauf der Gesamtlast einzelne Verläufe von Lastkomponenten, die wesentlich zur Bildung von Lastspitzen beitragen, die in der Betriebsvorrichtung auftreten können.

Anhand der der in der Betriebsvorrichtung aufgetretenen und im Lastrechner registrierten Verläufe der Lastkomponenten werden die folgenden Verfahrensschritte durchgeführt;

a) für jede der Lastkomponenten wird deren zukünftiger Verlauf berechnet;

b) die für die Lastkomponenten berechneten zukünftigen Verläufe werden einander überlagert, um einen zukünftigen Verlauf der Gesamtlast zu ermitteln;

c) der zukünftige bzw. prognostizierte Verlauf der Gesamtlast wird mit wenigstens einem Schwellwert verglichen, um zukünftige Lastspitzen zu ermitteln, die den angewendeten Schwellwert überschreiten; und

d) zur Vermeidung von Lastspitzen

d1) werden vor Eintreten der prognostizierten Lastspitzen einzelne Betriebseinheiten der Betriebsvorrichtung abgeschaltet oder in der Leistungsaufnahme reduziert oder mit einer zeitlichen Verschiebung betrieben; und/oder

d2) wird vor Eintreten der prognostizierten Lastspitzen kinetische Energie von Fahrzeugen gezielt in das elektrische Netz zurückgespeist, und/oder

d3) wird das Energieversorgungssystem derart gesteuert wird, dass die für die Lastspitzen benötigte Energie bereitgestellt wird.

Das erfindungsgemässe Verfahren basiert nicht auf der Auswertung von Fahrplänen und Zuglaufdaten oder Produktionsplänen, sondern auf Belastungen, die im Betriebsnetz der Betriebsvorrichtung bzw. Eisenbahnanlage tatsächlich aufgetreten sind. Diese Belastungen können automatisch ermittelt und ausgewertet werden, weshalb die aufwendige Arbeit zur Sammlung, Aktualisierung und Auswertung von Fahrplänen und Zuglaufdaten oder Produktionsplänen entfällt. Das erfindungsgemässe Verfahren hat daher den mehrfachen Vorteil, der präzisen und automatischen Ermittlung tatsächlich im Betriebsnetz auftretender Belastungen. Fehler bei der komplexen Auswertung von Fahrplänen und Zuglaufdaten oder Produktionsplänen werden konsequent ausgeschlossen.

Das erfindungsgemässe Verfahren erlaubt es, rechtzeitig vor dem Auftreten von Lastspitzen die erforderlichen Massnahmen zu treffen. Es ist somit nicht erforderlich, Lasten über grössere Zeitbereiche abzuschalten, in denen innerhalb der Eisenbahnanlage typischerweise grössere Verkehrsaufkommen und dadurch höhere Belastungen auftreten.

Stattdessen können Zeitabschnitte, in denen Lastspitzen auftreten, präzise prognostiziert und entsprechende Massnahmen zur Vermeidung der Lastspitzen oder zur Bereitstellung der dafür benötigten Energie zeitgenau eingeleitet werden. Dadurch können unnötige Abschaltungen vermieden werden, die stets einen Eingriff in ein funktionierendes System bedeuten und grundsätzlich unerwünscht sind. Die Eingriffe in die Betriebsvorrichtung bzw. in die Eisenbahnanlage werden daher auf ein Minimum reduziert, weshalb Einbussen an Funktionalität und Komfort ebenfalls auf ein Minimum reduziert werden.

Sofern Heizungen in Eisenbahnzügen kurzzeitig, z.B. für wenige Minuten ganz oder teilweise abgeschaltet werden, so wird dies durch die Passagiere in den Eisenbahnzügen kaum wahrgenommen. Durch die präzisere Lokalisierung und Eingrenzung der Lastspitzen können somit auch Betriebseinheiten, wie Heizungen von Fahrzeugen oder Gebäuden, abgeschaltet werden, deren Abschaltung bisher nicht in Betracht gezogen wurde, da eine längere Abschaltung durch die Betriebsvorrichtung selbst oder durch die Anwender nicht toleriert wurde. Aufgrund zeitlich kürzerer Eingriffe ergeben sich auch kaum funktionelle Einschränkungen oder gar Störungen. Aufgrund präziser Eingriffe in die Betriebsvorrichtung steht demnach eine grössere Anzahl von Betriebseinheiten für das Lastmanagement zur Verfügung.

Durch die präzisere Erfassung der Lastspitzen erlaubt das erfindungsgemässe Verfahren somit, gezielter und wirkungsvoller einzugreifen. Bei hohen Lastspitzen kann eine grössere Anzahl von Betriebseinheiten abgeschaltet werden, ohne dass Betriebsbeeinträchtigungen oder Komforteinbussen auftreten.

Das erfindungsgemässe Verfahren erlaubt es zudem, besonders vorteilhaft in die Betriebsvorrichtung einzugreifen und auf Lastabschaltungen zu verzichten. Stattdessen werden die erfindungsgemäss gewonnenen Erkenntnisse über die periodisch auftretenden Lastkomponenten zur zeitlich verschobenen Steuerung der Betriebseinheiten verwendet.

Dabei können zwei verschiedene wirkungsvolle Massnahmen zur Vermeidung der Lastspitzen angewendet werden, die von den Nutzern der Betriebsvorrichtung bzw. der Eisenbahnanlage kaum wahrgenommen werden.

Mit einer ersten Massnahme wird eine gegenseitige Verschiebung der periodischen Verläufe von zwei oder mehreren Lastkomponenten vorgenommen, sodass sich diese in Zeitbereichen, für die Lastspitzen prognostiziert wurden, derart überlagern, dass eine minimale Last resultiert. D.h., im Bereich der Lastspitzen sollen die periodischen Verläufe der signifikanten Lastkomponenten ein Wellental aufweisen. Durch die Verschiebung der Verläufe der signifikanten Lastkomponenten gelingt es somit, Lastspitzen zu vermeiden, ohne den Betrieb wesentlich zu beeinträchtigen. In einer Eisenbahnanlage wird die Abfahrt ausgewählter, gegebenenfalls gruppierter Fahrzeuge vorverschoben oder nachverschoben, um leistungsintensive Anfahrten innerhalb der Lastspitzen zu vermeiden. Dabei kann eine Priorisierung der Betriebseinheiten vorgesehen werden. Z.B. werden die Abfahrten von Güterzügen um grössere Zeitabstände verschoben, als die Abfahrten von Personenzügen.

Mit einer zweiten Massnahme werden die Betriebstakte der Betriebsvorrichtung bzw. der Fahrplantakt der Eisenbahnanlage in den Zeitbereichen, in denen Lastspitzen prognostiziert wurden, zumindest teilweise aufgehoben. Dazu werden zu einer periodischen Lastkomponente korrespondierende Betriebseinheiten mit einer gegenseitigen zeitlichen Verschiebung betrieben. Z.B. werden ausgewählte Fahrzeuge der Eisenbahnanlage, die im Viertelstundentakt verkehren, verteilt über einige Minuten in Gang gesetzt. Auch in diesem Fall kann eine Priorisierung der Betriebseinheiten erfolgen.

Bei beiden Massnahmen können Fahrzeuge nach Fahrzeitreserve oder Besetzungsgrad beziehungsweise Auslastung der Fahrzeuge priorisiert werden und so mehr oder weniger taktgenau betrieben werden. Fahrzeuge mit hohem Besetzungsgrad werden vorzugsweise priorisiert. Fahrzeuge, die Strecken befahren, in denen ausreichend Fahrzeitreserve vorhanden ist, werden hingegen mit tieferer Priorität betrieben, da verzögerte Abfahrten bis zur nächsten Haltestelle wieder aufgeholt werden können. Somit ergeben sich keine oder nur minime Auswirkungen auf die Passagierpünktlichkeit und die Fahrplanstabilität.

Die beiden beschriebenen Massnahmen, sowie Massnahmen zur Lastreduktion oder Lastabschaltung von Betriebseinheiten werden vorzugsweise derart gemischt, dass im Bereich der Lastspitzen jeweils die erforderliche Lastreduktion resultiert.

Betriebseinheiten sind vorzugsweise stationäre oder mobile Funktionseinheiten der Betriebsvorrichtung bzw. der Eisenbahnanlage, die mit elektrischem Strom versorgt werden. In einer Eisenbahnanlage sind z.B. Weichenheizungen stationäre Betriebseinheiten. Lokomotiven gehören hingegen zu den mobilen Betriebseinheiten. Betriebseinheiten können auch nach deren Bedeutung für die Betriebsvorrichtung geordnet werden. Betriebseinheiten, die ohne Unterbruch für die Betriebsvorrichtung zur Verfügung stehen müssen, werden einer ersten Gruppe zugeteilt. Für diese Gruppe, die z.B. sicherheitsrelevante Betriebseinheiten, wie Stellwerke, umfasst, wird eine Abschaltung generell ausgeschlossen.

Einer zweiten Gruppe werden Betriebseinheiten zugeordnet, die für den Betrieb der Betriebsvorrichtung bzw. der Eisenbahnanlage zwingend erforderlich sind, für die aber eine kurze Abschaltung nicht ausgeschlossen ist. Z.B. können Lokomotiven für eine kurze Zeit, z.B. 1 Minute abgeschaltet werden. Zusätzlich kann zwischen Lokomotiven von Personenzügen und Güterzügen unterschieden werden, die unter Umständen nicht mit gleicher Priorität betrieben werden müssen. In eine weitere Gruppe gehören Heizungen, insbesondere Weichenheizungen, die für eine längere Zeit, z.B. 5 bis 15 Minuten ausser Betrieb gesetzt werden können. In eine letzte Gruppe gehören Betriebseinheiten, die in keinem direkten funktionalen Zusammenhang mit dem Betriebsablauf oder Prozessverlauf der Betriebsvorrichtung stehen und im Wesentlichen eine Komfortfunktion aufweisen. Z.B. können Gebäudeheizungen, Fahrzeugheizungen oder Beleuchtungen zumindest teilweise abgeschaltet werden, ohne dass der Betrieb der Eisenbahnanlage beeinträchtigt wird.

Für jede Betriebsvorrichtung, die mittels des erfindungsgemässen Verfahrens gesteuert wird, werden daher vorzugsweise alle wesentlichen Betriebseinheiten oder Netzeinheiten in einer Liste gruppiert und priorisiert. Die Ansteuerung der Betriebseinheiten kann durch den Lastrechner erfolgen. Vorzugsweise ist der Lastrechner mit einem Betriebsrechner verbunden, welcher Zugriff auf die relevanten Betriebseinheiten hat. Vom Lastrechner werden dem Betriebsrechner die Lastspitzen gemeldet, der entsprechende Massnahmen ergreift und ausgewählte Lasten bzw. Betriebseinheiten in der Leistungsaufnahme beschränken, abschalten oder mit einer zeitlichen Verschiebung betreiben kann, um die Lastspitzen zu vermeiden.

Der Lastrechner meldet dem Betriebsrechner vorzugsweise die Höhe und die Dauer der Lastspitzen. Z.B. meldet der Lastrechner, dass zwischen 18:05 Uhr und 18:10 Uhr eine Lastspitze von 25 MW auftritt. In der Folge wird der Betriebsrechner zwischen 18:05 Uhr und 18:10 Uhr Betriebseinheiten in der Leistungsaufnahme beschränken, abschalten oder deren Betrieb zeitlich vor oder nach verschieben, damit innerhalb dieses Zeitintervalls rund 25 MW Leistung weniger bezogen wird.

Damit der zu Verlauf der Gesamtlast für einen Tag möglichst präzise prognostiziert werden kann, werden vorzugsweise alle historisch relevanten Daten, einschliesslich der Rahmenbedingungen, d.h. der inneren und äusseren Einflüsse und Gegebenheiten, wie der Witterung und der Temperaturen, aufgezeichnet. Durch die wiederholte Aufzeichnung der Lastverläufe über mehrere Tage und die Ermittlung der durchschnittlichen Werte kann ein gemittelter Gesamtlastverlauf bestimmt werden, in dem alle charakteristischen Merkmale des täglichen Lastverlaufs hervortreten und sporadische Abweichungen unterdrückt oder reduziert werden. Vorzugsweise werden Lastverläufe je für einen Wochentag aufgezeichnet und gemittelt, sodass Betriebsunterschiede, z.B. Fahrplanunterschiede während den Wochentagen den prognostizierten Gesamtlastverlauf nicht beeinflussen. Ebenso werden die Lastverläufe für Feiertage individuell aufgezeichnet. Ferner werden Aufzeichnungen vorzugsweise unter Berücksichtigung der Rahmenbedingungen gruppiert, sodass Lastverläufe z.B. für unterschiedliche Witterungsverhältnisse und Temperaturen gruppiert vorliegen.

Vorzugsweise können äussere Einflüsse auch durch eine Näherung einer Funktion abgebildet werden und somit anstatt einer Gruppierung eine mathematische Funktion zur Prognose des Einflusses (z.B. der Temperatureinfluss auf PS0-E) auf die Last verwendet werden. Bei der Wahl der Funktion (z.B. Gerade, Parabel) kann vorteilhaft Vorwissen aus Betriebserfahrung oder einer vorangegangenen physikalischen Modellierung eingesetzt werden.

Zur Ermittlung der Lastkomponenten innerhalb des Verlaufs der Gesamtlast, gegebenenfalls des gemittelten Gesamtlastverlaufs, werden der Verlauf der Grundlast sowie rekursiv oder periodisch auftretende Signalanteile ermittelt. Die periodisch auftretenden Signalanteile werden vorzugsweise mittels einer Fourier-Transformation aus dem gegebenenfalls gemittelten Gesamtlastverlauf extrahiert.

Der Verlauf der Grundlast ist der gleitende Mittelwert der Gesamtlast, der durch Glättung von Zeit- und Datenreihen bzw. durch das Entfernen der höheren Frequenzanteile gebildet wird. Der gleitende Mittelwert resultiert z.B. aus der Anwendung eines Tiefpassfilters mit endlicher Impulsantwort (FIR-Filter).

Rekursive oder aperiodische Vorgänge in der Betriebsvorrichtung, die innerhalb eines Tages nur einmal oder mehrmals auftreten, können mit Gewohnheiten des Betreibers der Betriebsvorrichtung zusammenhängen, der z.B. kurz vor Arbeitsbeginn die Gebäude beleuchtet und mit Heizenergie versorgt. Vorzugsweise werden auch solche Lastvorgänge berücksichtigt.

Periodische Vorgänge sind von vorrangiger Bedeutung, falls die Betriebsabläufe in der Betriebsvorrichtung getaktet sind. In einer Eisenbahnanlage, welche nach einem Taktfahrplan arbeitet, werden die Züge z.B. mit einem Takt von n Minuten (z.B. 15, 30 oder 60 Minuten) betrieben. Bei der gemeinsamen Abfahrt von Zügen treten daher periodisch hohe Lasten auf.

Vorzugsweise wird auch die Höhe des Rauschanteils der Lastkomponente bzw. des Lastrauschens ermittelt, welches durch zufälliges Einschalten und Abschalten von Betriebseinheiten innerhalb der Betriebsvorrichtung verursacht wird. Das Lastrauschen kann dabei einen erheblichen Einfluss auf die Gesamtlast und die Lastspitzen haben und kann somit ebenfalls zu Instabilitäten im Stromnetz der Betriebsvorrichtung führen.

Vorzugsweise werden Daten interner Einflüsse auf den Verlauf der Gesamtlast, wie Zustandsdaten der Betriebsvorrichtung, Störungsmeldungen, Fahrplandaten und Fahrplanänderungen, ausgewertet und entsprechende Belastungsänderungen ermittelt und bei der Bestimmung des zukünftigen Verlaufs der Gesamtlast berücksichtigt. Beim Auftreten von Störungen werden normalerweise zahlreiche Lasten ausgeschaltet bzw. Fahrzeuge ausser Betrieb gesetzt. Nach Beseitigung der Störung werden die Lasten wieder zugeschaltet bzw. die Fahrzeuge wieder in Betrieb gesetzt, weshalb für eine kurze Zeitperiode mit einer hohen Gesamtlast zu rechnen ist. Ebenso führen Fahrplanänderungen zu Änderungen im Lastverlauf.

In einer weiteren vorzugsweisen Ausgestaltung werden Daten externer Einflüsse auf den Verlauf der Gesamtlast ausgewertet und entsprechende Belastungsänderungen berechnet und bei der Bestimmung des zukünftigen Verlaufs der Gesamtlast berücksichtigt. Klimatische Einwirkungen haben einen erheblichen Einfluss auf die Belastung des Betriebsnetzes einer Eisenbahnanlage. Bei Temperaturen unter dem Gefrierpunkt werden Weichenheizungen eingesetzt. Mittels Wetterstationen mit Temperatursensoren werden die Witterungs- und Temperaturverhältnisse gemessen. Gestützt auf die gemessenen Daten erfolgt die automatische Ein- bzw. Abschaltung der Energiezufuhr lokal oder über Fernwirksysteme bzw. übergeordnete Leitsysteme.

Aufgrund von Witterungseinflüssen oder Störungen in der Betriebsvorrichtung können Phasenverschiebungen bei den periodisch verlaufenden Lastkomponenten auftreten. Bei Schneefall oder technischen Störungen in der Eisenbahnanlage ist es möglich, dass sich die Abfahrten der Züge verzögern, wodurch Abweichungen vom Fahrplantakt und somit auch von den prognostizierten Verläufen der Gesamtlast auftreten. Vom Lastrechner wird daher vorzugsweise stets der aktuelle Verlauf der Gesamtlast ausgewertet, um die aktuellen Verläufe der Lastkomponenten zu ermitteln, die mit den zuvor ermittelten zukünftigen Verläufen der Lastkomponenten verglichen werden. Sofern Abweichungen festgestellt werden, werden die zuvor ermittelten Verläufe der Lastkomponenten korrigiert und dann wieder einander überlagert, um den zukünftigen Verlauf der Gesamtlast zu ermitteln. Auf diese Weise gelingt es, den prognostizierten Verlauf der Gesamtlast an die äusseren Einflüsse anzupassen. Der Lastrechner arbeitet daher vorzugsweise mit zahlreichen Erfahrungswerten bzw. früher registrierten Lastverläufen und Rahmenbedingungen sowie mit aktuell ermittelten Daten.

Vorzugsweise wird auch die Höhe des Rauschanteils des aktuellen Lastverlaufs ermittelt und der zukünftige Verlauf der Gesamtlast entsprechend angepasst, falls ein verändertes Lastrauschen festgestellt wird.

Änderungen des prognostizierten Verlaufs der Gesamtlast erfolgen vorzugsweise in beide Richtungen. Vorzugsweise werden bei der Korrektur des prognostizierten Verlaufs der Gesamtlast auch die Schwellwerte angepasst, sodass auftretende Lastspitzen weiterhin präzise detektiert werden können.

Lastspitzen sind unabhängig von der jeweiligen Belastung des Stromnetzes bzw. Betriebsnetzes unerwünscht. Sofern die Gesamtlast über einige Stunden auf einem tiefen Niveau, z.B. bei der Hälfte des Lastmaximums verläuft, ist auch in diesem Bereich die Bereitstellung von Energiereserven mit höherem Aufwand und Kosten verbunden. Vorzugsweise wird daher für zwei oder mehrere Bereiche des zukünftigen Verlaufs der Gesamtlast je ein Schwellwert vorgesehen, um zukünftige Lastspitzen zu detektieren, die den jeweiligen Schwellwert überschreiten.

Vorzugsweise wird ein variabler oder adaptiver Schwellwert bzw. Schwellwertverlauf verwendet, der an den Verlauf der Grundlast angepasst und davon um einen Offset beabstandet ist. Dieser an den Verlauf der Grundlast adaptierte Schwellwertverlauf erlaubt es, alle Abweichungen von der Grundlast zu detektieren. Dadurch wird es möglich, auch periodisch von der Grundlast abweichende Lastbäuche zu ermitteln und zu kompensieren. Das erfindungsgemässe Verfahren erlaubt es somit, nicht nur Lastspitzen, sondern auch die normale Lastwelligkeit durch eine Laststeuerung zu kompensieren. Der Verlauf der Gesamtlast kann dadurch geglättet werden, wodurch sowohl die Betriebsvorrichtung, als auch das Energieversorgungssystem weiter stabilisiert werden können. Durch die Laststabilisierung in der Betriebsvorrichtung resultiert auch eine reduzierte Belastung des Energieversorgungssystems, welches ebenfalls, jedoch auf einer höheren Ebene, mit Lastspitzen konfrontiert ist. Z.B. ist das Energieversorgungssystem mit zahlreichen Betriebsvorrichtungen verbunden. Falls diese Betriebsvorrichtungen je mit dem erfindungsgemässen Verfahren gesteuert werden, so wird die Welligkeit des Energiebedarfs beim Energieversorgungssystem deutlich reduziert.

Für das Auftreten von prognostizierten Lastspitzen, welche den zugehörigen Schwellwert überschreiten, werden Steuersignale mit einer Vorlaufzeit erzeugt, die es erlaubt, vor Auftreten der Lastspitzen ausgewählte Betriebseinheiten der Betriebsvorrichtung in der Leistungsaufnahme zu beschränken, abzuschalten oder mit einer zeitlichen Verschiebung zu betreiben, um die prognostizierten Lastspitzen zu vermeiden, oder das Energieversorgungssystem derart zu steuern, dass die für die Lastspitzen benötigte Energie bei Eintreten der Lastspitzen bereit steht.

Zur Durchführung des Verfahrens ist der Lastrechner RL mit einem Programm versehen, mittels dessen die Betriebsvorrichtung nach dem erfindungsgemässen Verfahren überwacht und gesteuert werden kann.

Der Lastrechner ist ferner über Datenkanäle mit einem Betriebsrechner verbunden, mittels dessen ausgewählte Betriebseinheiten der Betriebsvorrichtung steuerbar sind. Vom Betriebsrechner können dem Lastrechner zusätzlich aktuelle Daten der aufgetretenen Belastungen und der aufgetretenen internen und externen Einflüsse mitgeteilt werden, die den Lastverlauf beeinflussen. Der Betriebsrechner überwacht zudem vorzugsweise den Zustand der abgeschalteten Betriebseinheiten, z.B. um diese wieder zu aktivieren, falls dies notwendig ist.

Die Kenntnis zukünftiger Lastverläufe erlaubt es nicht nur das selektive Abschalten von Lasten, um erwartete Lastspitzen zu verhindern, sondern auch die verbesserte Steuerung und/oder Regelung der wenigstens eines oder mehrerer Energieversorgungsnetze oder Energiequellen.

Anhand des erfindungsgemässen Verfahrens kann der Betreiber einer Betriebsvorrichtung, insbesondere einer Eisenbahnanlage, die Grundlast bzw. den erwarteten Energiebedarf von einem ersten Energieversorgungssystem abdecken lassen und die Betriebsvorrichtung oder ein zweites Energieversorgungssystem derart steuern und regeln, dass die Energieabnahme von ersten Energieversorgungssystem nicht überschritten und gegebenenfalls auch nicht unterschritten wird. Durch das rechtzeitige Abschalten von Lasten können kostspielige Energieabweichungen nach oben vermieden werden. Durch die Steuerung des zweiten Energieversorgungssystems kann hingegen die rechtzeitige Lieferung von Energie vom zweiten Energieversorgungssystem sichergestellt werden, mit der ein zusätzlicher Energiebedarf abgedeckt werden kann, der die Grundlast überschreitet.

Vorzugsweise ist der Lastrechner auch mit einem Energierechner verbunden, mittels dessen das wenigstens eine erste und/oder zweite Energieversorgungssystem steuerbar ist. Dem Energierechner kann mitgeteilt werden, dass aufgrund von Lastspitzen ein höherer Energiebedarf auftreten wird. Ferner kann die Dauer und die Höhe des zusätzlichen Energiebedarfs angegeben werden. Der Energierechner kann zurückmelden, dass der zusätzliche Energiebedarf bereitgestellt wird oder nicht, sodass stattdessen eine Lastabschaltung, Lastreduktion, Betriebsverschiebung rechtzeitig durch den Betriebsrechner durchgeführt werden kann.

Vorzugsweise wird anhand einer oder mehrerer miteinander summierte Lastkomponenten für eine oder mehrere Regelungsperioden ein gleichanteilsfreies Welligkeitssignal gebildet, unter Berücksichtigung dessen das wenigstens eine erste und/oder zweite Energieversorgungssystem gesteuert oder geregelt wird, das Teil der Regelstrecke eines Regelkreises ist, mittels dessen Energieabweichungen von einer Grundlast abgedeckt werden, die von einem zweiten Energieversorgungssystem getragen wird.

Dem Regelkreis wird vorzugsweise eine der Grundlast entsprechende Führungsgrösse, die der Grundlast entspricht, zugeführt, der das Welligkeitssignal überlagert wird, um eine korrigierte Führungsgrösse zu bilden, die mit einer aus der Betriebsvorrichtung gewonnenen Messgrösse verglichen wird, die der aktuellen Last bzw. dem aktuellen Energiebedarf entspricht, um eine Regelabweichung zu bilden, die einem Regler zugeführt wird, welcher eine Stellgrösse an das geregelte Energieversorgungssystem abgibt.

Ferner ist der Lastrechner über Datenkanäle vorzugsweise mit einem Planungsrechner verbunden, aus dem Daten, insbesondere Fahrplandaten, für den zukünftigen Betrieb der Betriebsvorrichtung abrufbar sind. Für Fahrplanänderungen wird der Lastrechner die täglichen Lastverläufe neu aufnehmen, um zukünftige Lastspitzen ermitteln zu können.

Der Lastrechner bzw. dessen Programm wird daher laufend an die Betriebsvorrichtung bzw. die Eisenbahnanlage angepasst, um zukünftige Lastverläufe präzise prognostizieren zu können.

Um grössere Betriebsvorrichtungen bzw. grössere Eisenbahnanlagen präzise steuern zu können, werden diese vorzugsweise segmentiert. Z.B. wird die Eisenbahnanlage in möglichst homogene Anlagensegmente aufgeteilt. Vorzugsweise wird vorgesehen, dass in jedem Anlagensegment eine minimale Anzahl von Streckenunterbrüchen auftritt. Dadurch werden die Anlagensegmente hinsichtlich auftretender Störungen gegeneinander isoliert. Eine Störung in einem Anlagensegment hat dabei keine oder nur eine reduzierte Auswirkung auf ein benachbartes Anlagensegment. Das erfindungsgemässe Verfahren kann daher individuell auf jedes einzelne Anlagensegment oder auch auf die gesamte Bahnanlage angewendet werden.

Nachfolgend wird die Erfindung anhand von Zeichnungen näher erläutert. Dabei zeigt:

Fig. 1    exemplarisch einen Verlauf der Gesamtlast PG in einem Betriebsnetz BN einer Betriebsvorrichtung bzw. einer Eisenbahnanlage EA über 24 Stunden mit höheren Belastungen und Lastspitzen in den Zeitbereichen um 08:00 Uhr und 18:00 Uhr;

Fig. 2    die Überlagerung PGG der während mehreren Tagen aufgenommenen Verläufe der Gesamtlast PG im Betriebsnetz BN der Eisenbahnanlage EA im Zeitbereich und nach der Fourier-Transformation im Frequenzbereich;

Fig. 3a    die aus der Fourier-Transformation resultierenden Frequenzanteile oder Lastschwingungen mit Angabe der Amplituden, der Frequenz und der Periodendauer für Frequenzen bis 2 mHz;

Fig. 3b    die aus der Fourier-Transformation resultierenden Frequenzanteile oder Lastschwingungen mit Angabe der Amplituden, der Frequenz und der Periodendauer für Frequenzen über 2 mHz;

Fig. 4a    den gegebenenfalls gemittelten Verlauf einer Gesamtlast PG, PGG über 24 Stunden;

Fig. 4b    den aus dem Verlauf der Gesamtlast PG, PGG von Fig. 4a extrahierten Verlauf der Grundlast PS0 über 24 Stunden nach Abtrennung periodischer Signalanteile und des Lastrauschens;

Fig. 4c    den aus dem Verlauf der Gesamtlast PG, PGG von Fig. 4a extrahierten Verlauf einer ersten Lastschwingung PS1 über 24 Stunden, die eine Periodendauer von 30 Minuten aufweist;

Fig. 4d    die Hüllkurve einer aus dem Verlauf der Gesamtlast PG, PGG von Fig. 4a extrahierten zweiten Lastschwingung PS2 über 24 Stunden, die eine Periodendauer von 1 Minute aufweist, mit einer Detaildarstellung dieser Lastschwingung PS2 im Zeitbereich zwischen 10:00 Uhr und 10:15 Uhr;

Fig. 4e    den aus dem Verlauf der Gesamtlast PG, PGG von Fig. 4a extrahierten Verlauf des Lastrauschens PR über 24 Stunden;

Fig. 5a    einen für 24 Stunden prognostizierten Verlauf der Grundlast PSOE ohne die Verläufe der für die nächsten 24 Stunden erwarteten höherfrequenten Lastschwingungen PS1E, PS2E und des Lastrauschens PRE, die separat dargestellt sind;

Fig. 5b    die Überlagerung des prognostizierten Verlaufs der Grundlast PSOE und der prognostizierten höherfrequenten Lastschwingungen PS1E, PS2E sowie des prognostizierten Lastrauschens PRE, welche den prognostizierten Verlauf der Gesamtlast PGE bildet;

Fig. 6a    das Betriebsnetz BN der Eisenbahnanlage EA, aus dem Lastdaten einem Lastrechner RL zugeführt werden, der mit einem Betriebsrechner RBN, einem Planungsrechner RP und einem Energierechner REN Daten austauscht;

Fig. 6b    den aktuellen Verlauf der Gesamtlast des Betriebsnetzes BN der Eisenbahnanlage EA bis etwa 10:30 Uhr, aus dem die aktuellen Phasenlagen und/oder Amplituden oder Werte der Grundlast PS0 gemäss Fig. 4b, der Lastschwingungen PS1, PS2 gemäss Fig. 4c und Fig. 4d sowie die Amplitude oder Leistung des Lastrauschens PR gemäss Fig. 4e ermittelt werden, um Korrekturmassnahmen einleiten zu können;

Fig. 7    die Steuerung eines externen Energieversorgungssystems EVN2 sowie die Regelung eines internen Energieversorgungssystems EVN1 mittels eines Regelkreises EAR; und

Fig. 8    aus dem Verlauf einer Gesamtlast PG, PGG z.B. von Fig. 4a extrahierte Verläufe von Lastschwingungen P15, P30, die eine Periodendauer von 15 bzw. 30 Minuten aufweisen, den Mittelwert PM15 der Summe dieser Lastschwingungen PS1 und PS2 für eine Periodendauer von 15 Minuten sowie einen aus den drei genannten Signalverläufen gebildeten Korrekturverlauf kpw für die Verwendung im Regelkreis EAR in Fig. 7.

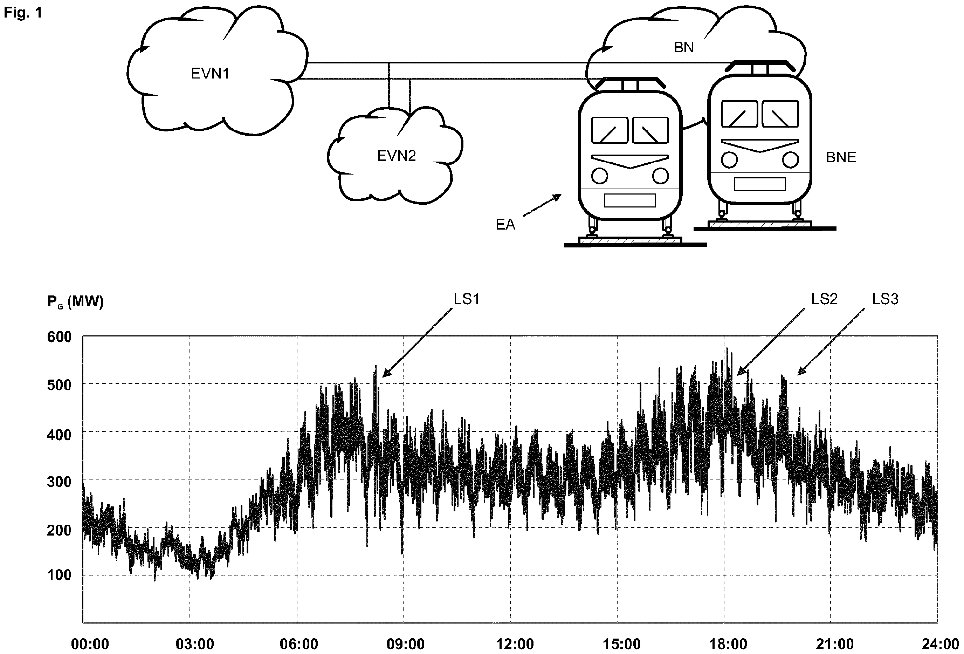

Fig. 1 zeigt in einem Diagramm exemplarisch den Lastverlauf der Gesamtlast PG in einer Betriebsvorrichtung bzw. in einem Betriebsnetz BN einer Eisenbahnanlage EA über 24 Stunden. Die Eisenbahnanlage EA ist mit zwei Eisenbahnzügen oder Betriebseinheiten BNE gezeigt, die als Lasten im Betriebsnetz BN auftreten. Das Betriebsnetz BN der Eisenbahnanlage EA wird von einem ersten Energieversorgungsnetz EVN1 und einem zweiten Energieversorgungsnetz EVN2 gespeist.

Aus dem Diagramm ist ersichtlich, dass in den Zeitbereichen um 08:00 Uhr und um 18:00 Uhr mehr Züge verkehren und dadurch höhere Belastungen im Betriebsnetz BN der Eisenbahnanlage EA auftreten. Um 08:00 Uhr werden Belastungen von bis zu 500 MW und um 18:00 Uhr Belastungen bis zu 550 MW registriert. Dazwischen sinkt die Belastung auf unter 400 MW. Eine nähere Betrachtung des Diagramms zeigt, dass nicht die durchschnittlichen Schwankungen des Gesamtlastverlaufs PG, die bisher für die Lastregelung hinzugezogen wurde, sondern auftretende Lastspitzen ein zentrales Problem darstellen. Exemplarisch wird auf die Lastspitzen LS1 etwa um 08:15 Uhr, LS2 etwa um 18:10 Uhr und LS3 etwa um 20:00 Uhr verwiesen, die besonders signifikant sind. Bei der Lastspitze LS1 tritt innerhalb kurzer Zeit ein Lastanstieg bzw. ein Anstieg des Energiebedarfs um etwa 66 % von etwa 300 MW bis 500 MW auf. Diesen hohen Belastungen wurde bisher mit Lastabschaltungen über eine längere Zeitdauer begegnet. Zu beachten ist, dass Lastspitzen kurzzeitig auch ausserhalb der erhöhten Lastbereiche auftreten können. Würde man angesichts des Lastverlaufs darauf schliessen, dass ein maximaler Energiebedarf je um 08:00 Uhr und um 18:00 Uhr auftritt, so würde die kurze aber intensive Lastspitze LS3 um 20:00 Uhr vernachlässigt.

Zu beachten ist ferner, dass die durchschnittlichen Belastungen im Zeitbereich um 18:00 Uhr höher sind als um 8:00 Uhr. Für die Behandlung der Lastspitzen LS1 bzw. LS2 in diesen Zeitbereichen werden daher vorzugsweise unterschiedliche Massnahmen vorgesehen.

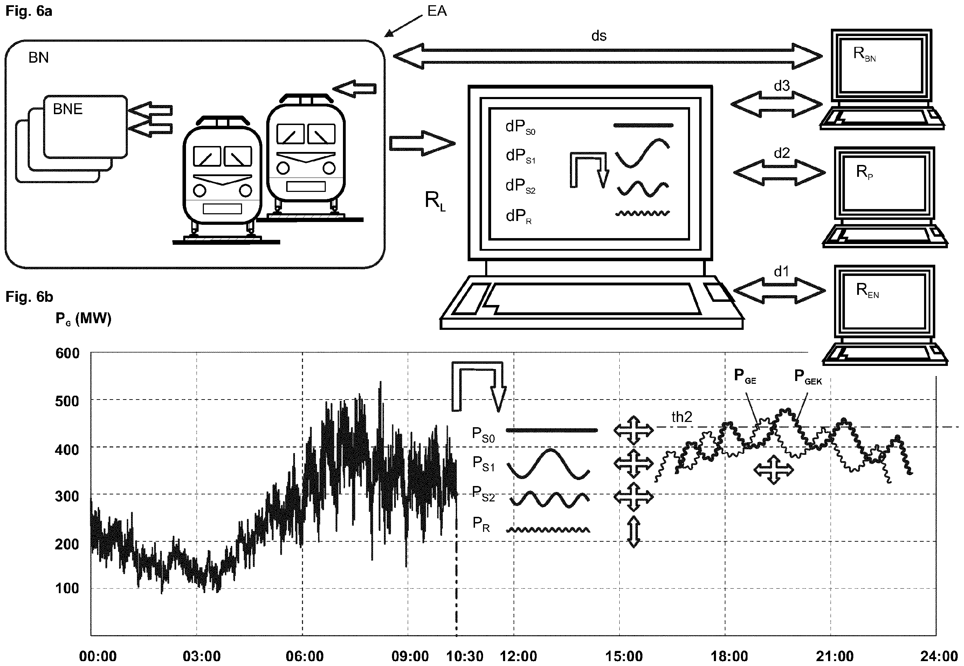

Nach dem erfindungsgemässen Verfahren wird zur Vermeidung oder zur Kompensation von Lastspitzen ein Lastrechner RL (siehe Fig. 6a) verwendet, der mit einem Lastmanagementprogramm ausgestattet ist. Dem Lastrechner RL werden z.B. vom Betriebsrechner RB der Betriebsvorrichtung bzw. des Betriebsnetzes BN der Eisenbahnanlage EA oder von einem Energierechner REN des Energieversorgungssystems (siehe Fig. 6a) die Daten des Verlaufs der in der Betriebsvorrichtung bzw. im Betriebsnetzes BN gemessenen Gesamtlast PG zugeführt. Im Lastrechner RL können ferner gemeldete Teillasten z.B. Lasten von Netzsegmenten summiert werden, um die Gesamtlast PG zu ermitteln.

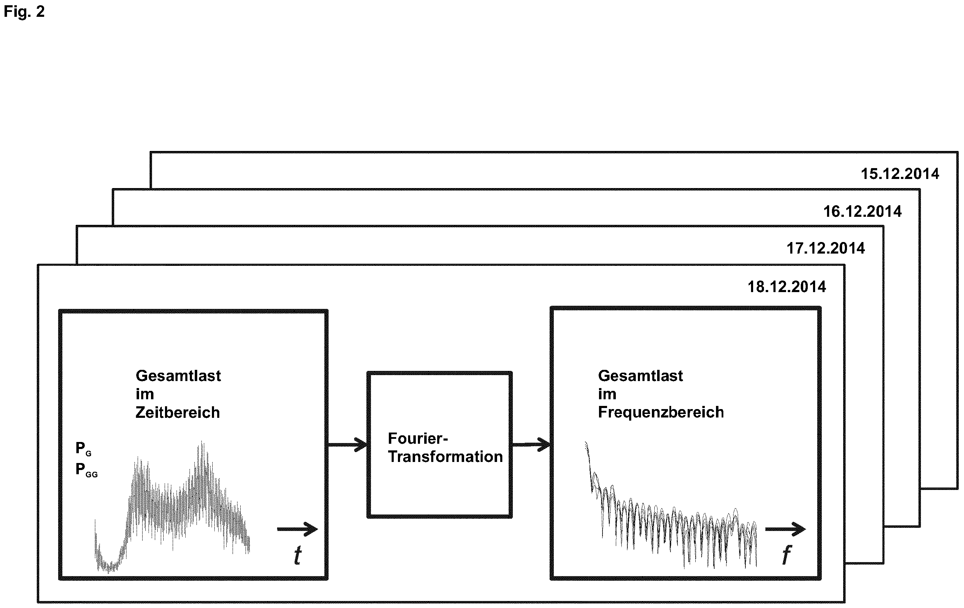

Fig. 2 zeigt, dass die Lastverläufe vorzugsweise über mehrere Tage (im Beispiel vom 15.12.2014 bis zum 18.12.2014) summiert und gemittelt werden, um charakteristische Muster des Lastverlaufs deutlich hervortreten zu lassen. Für einen einzelnen Tag resultiert ein einzelner Verlauf der Gesamtlast PG. Für die über mehrere Tage aufgezeichneten täglichen Verläufe der Gesamtlast PG wird ein gemittelter Gesamtlastverlauf PGG gebildet, der eine zuverlässigere Prognose zukünftiger Lastverläufe erlaubt.

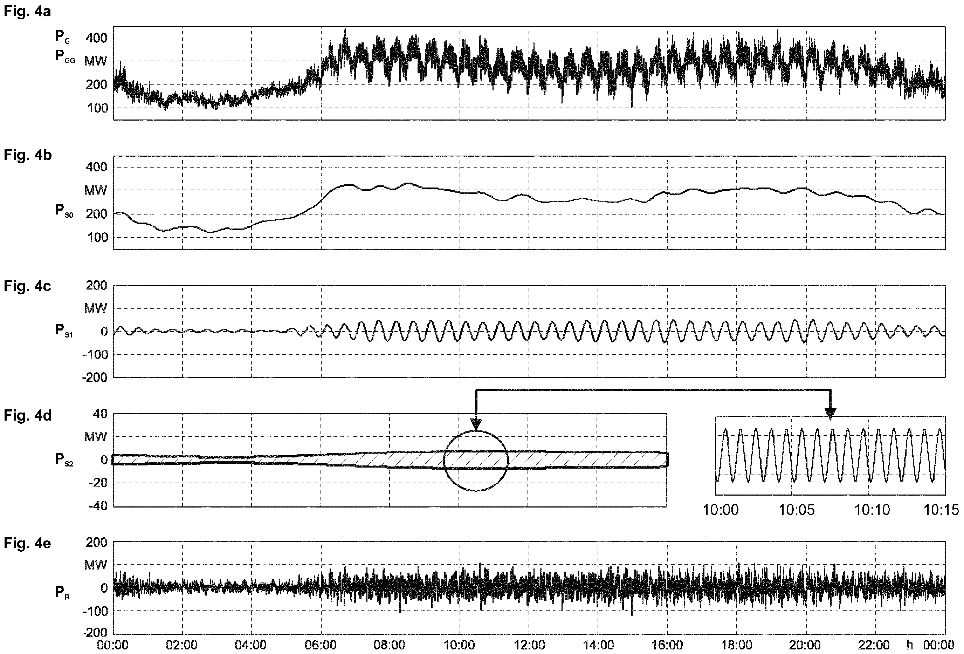

Aus dem Verlauf der Gesamtlast PG oder dem gemittelten Gesamtlastverlauf PGG werden in der Folge einzelne Verläufe von Lastkomponenten PS0, PS1, PS2 ermittelt (siehe Fig. 4b, 4c und 4d), die wesentlich zur Bildung von Lastspitzen beitragen, die in der Betriebsvorrichtung auftreten.

Der Verlauf der Grundlast entspricht dem gleitenden Mittelwert des Verlaufs der Gesamtlast PG oder des gemittelten Gesamtlastverlaufs PGG, der durch Glättung von Zeit- und Datenreihen bzw. durch das Entfernen von Signalanteilen mit höherer Frequenz gebildet wird. Vorzugsweise weist der Lastrechner RL einen Signalprozessor auf, mittels dessen ein FIR-Filter realisiert wird, dass zur Filterung des Verlaufs der gegebenenfalls gemittelten Gesamtlast PG, PGG verwendet ist.

Zur Ermittlung periodisch verlaufender Lastkomponenten PS1, PS2 wird der Verlauf der gegebenenfalls gemittelten Gesamtlast PG vorzugsweise einer Fourier-Transformation unterworfen. Alternativ können auch Bandfilter eingesetzt werden.

Die linke Seite von Fig. 2 zeigt den Verlauf der Gesamtlast PG, PGG im Zeitbereich. Auf der rechten Seite von Fig. 2 ist der Verlauf der Gesamtlast PG, PGG im Frequenzbereich dargestellt.

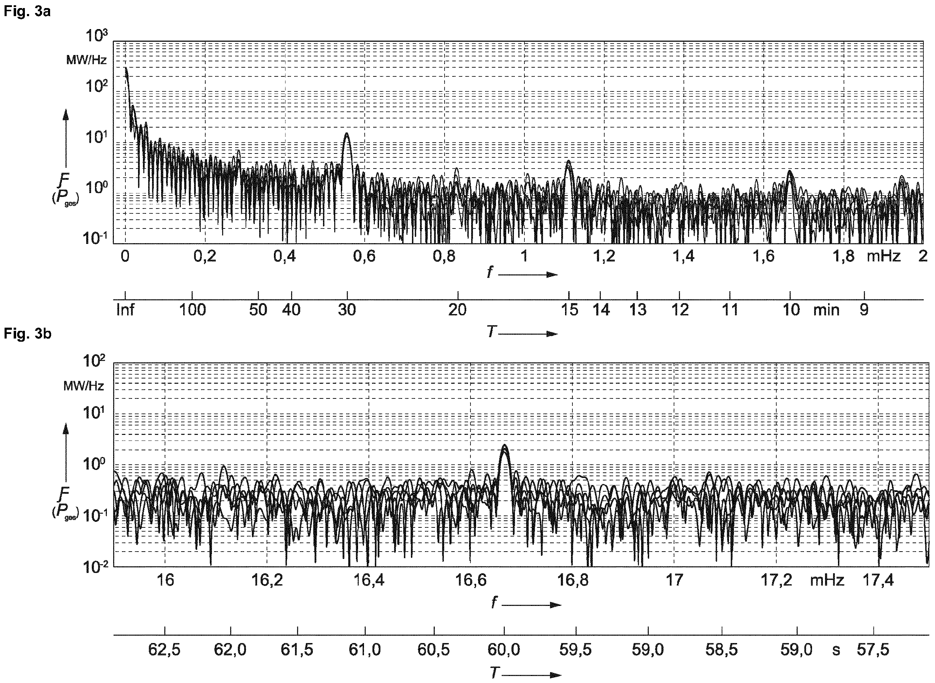

Fig. 3a zeigt die aus der Fourier-Transformation resultierenden Frequenzanteile oder Lastschwingungen mit Angabe der Amplituden, der Frequenz und der Periodendauer für Frequenzen bis 2 mHz.

Fig. 3b zeigt die aus der Fourier-Transformation resultierenden Frequenzanteile oder Lastschwingungen mit Angabe der Amplituden, der Frequenz und der Periodendauer für Frequenzen über 2 mHz.

Auf der Abszisse sind die Frequenz und die Periodendauer (in Minuten bzw. Sekunden) der Lastschwingungen eingetragen. Auf der Ordinate ist die Amplitude der Lastschwingungen in Megawatt angegeben. Es ist ersichtlich, dass im Bereich der Grundlast eine Leistung von einigen 100 MW auftritt. Ferner treten Lastschwingungen mit hoher Amplitude mit Periodendauern von 1 Minute, 10 Minuten, 15 Minuten und 30 Minuten auf. Nachfolgend werden vereinfacht nur die Lastschwingungen mit den Periodendauern von 1 Minute und 30 Minuten berücksichtigt. Diese Lastschwingungen resultieren aus dem Betriebstakt bzw. dem Taktfahrplan, mit dem die Fahrzeuge in der Eisenbahnanlage EA verkehren.

Fig. 4a zeigt den Verlauf einer gegebenenfalls gemittelten Gesamtlast PG, PGG über 24 Stunden. Dieser Verlauf entspricht z.B. dem Verlauf der Gesamtlast PG, PGG von Fig. 1 oder Fig. 2.

Fig. 4b zeigt den aus dem Verlauf der Gesamtlast PG, PGG von Fig. 4a extrahierten Verlauf der Grundlast PS0 über 24 Stunden nach Abtrennung von Signalanteilen höherer Frequenz, z.B. Frequenzen oberhalb von 10 mHz. Wie erwähnt geht dieser Verlauf durch Filterung bzw. Mittelwertbildung aus dem Verlauf der Gesamtlast PG, PGG hervor. Dieser Verlauf wird auch als »Moving Average« bezeichnet.

Fig. 4c zeigt den Verlauf einer aus dem Verlauf der Gesamtlast PG, PGG von Fig. 4a extrahierten ersten Lastschwingung PS1 über 24 Stunden, die eine Periodendauer von 30 Minuten aufweist. Es ist ersichtlich, dass etwa ab 05:30 Uhr ein Anstieg der Amplitude dieser Lastschwingung PS1 auftritt, die einen Wert von rund 50 MW erreicht.

Fig. 4d zeigt die Hüllkurve einer aus dem Verlauf der Gesamtlast PG, PGG von Fig. 4a extrahierten zweiten Lastschwingung PS2 über 24 Stunden, die eine Periodendauer von 1 Minute aufweist, mit einer Detaildarstellung dieser Lastschwingung PS2 im Zeitbereich zwischen 10:00 Uhr und 10:15 Uhr. Diese Lastschwingung PS2 erreicht eine Amplitude von etwas mehr als 10 MW.

Fig. 4e zeigt den Verlauf des aus dem Verlauf der Gesamtlast PG, PGG von Fig. 4a extrahierten Lastrauschens PR über 24 Stunden. Es ist ersichtlich, dass dieses Lastrauschen hohe Leistungswerte erreichen kann und für das Lastmanagement daher vorzugsweise berücksichtigt wird.

Nach der Ermittlung der verschiedenen Lastkomponenten PS0, PS1, PS2 werden die zukünftigen Verläufe PS0E, PS1E, PS2E für jede der Lastkomponenten PS0, PS1, PS2 ermittelt. Es wird davon ausgegangen, dass die zukünftigen Verläufe der Lastschwingungen unverändert sind, falls sich die Rahmenbedingungen nicht ändern. Die prognostizierten Lastschwingungen PS0E, PS1E, PS2E entsprechen in diesem Fall den extrahierten Lastkomponenten PS0, PS1, PS2.

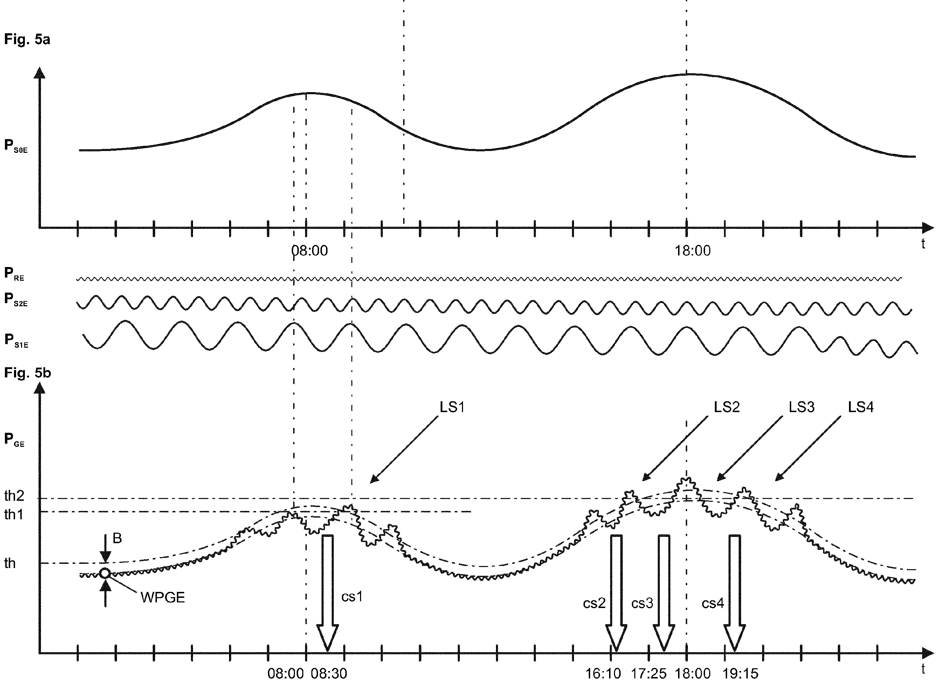

Fig. 5a zeigt schematisch den für den nächsten Tag prognostizierten Verlauf der Grundlast PSOE. Ferner sind die für den nächsten Tag prognostizierten Verläufe PS1E, PS2E und PRE der ersten beiden Lastschwingungen PS1, PS2 und des Lastrauschens PR gezeigt.

Fig. 5b zeigt schematisch die Überlagerung des prognostizierten Verlaufs der Grundlast PSOE und der prognostizierten höherfrequenten Lastschwingungen PS1E, PS2E sowie des prognostizierten Lastrauschens PRE, welche den prognostizierten Verlauf der Gesamtlast PGE bildet.

Bei der Prognostizierung des Verlaufs der Gesamtlast PGE werden vorzugsweise interne und/oder externe Einflüsse auf die Betriebsvorrichtung zusätzlich berücksichtigt. Dies kann auf verschiedene Arten geschehen. Einerseits können früher registrierte Verläufe von Gesamtlast PG zur Bildung des prognostizierten Verlaufs der Gesamtlast PGE hinzugezogen werden, bei denen vergleichbare interne und/oder externe Einflüsse vorgeherrscht haben. Alternativ können für die internen und/oder externen Einflüsse laufend Abweichungen vom prognostizierten Verlauf der Gesamtlast PGE ermittelt und bei der Bildung eines zukünftig prognostizierten Verlaufs der Gesamtlast PGE berücksichtigt werden.

Bei tieferen Temperaturen werden in der Betriebsvorrichtung üblicherweise Heizungen in Gang gesetzt, die zu einer hohen Belastung des Energieversorgungssystems führen. Sofern nun von einem Tag auf den anderen ein Temperatursturz prognostiziert wird, so können entweder Lastverläufe zur Bildung des Verlaufs der Gesamtlast PGE hinzugezogen werden, die bei der prognostizierten Temperatur aufgenommen wurden. Alternativ kann der Verlauf der Gesamtlast PGE gebildet und anschliessend in Abhängigkeit der vorliegenden internen oder externen Einflüsse mit einem Offset kombiniert oder mit einem Korrekturfaktor multipliziert werden.

Ebenso können Informationen zu auftretenden Störfällen gesammelt werden. Für jeden Störfall wird dabei die Auswirkung auf die Belastung der Betriebsvorrichtung untersucht. Vorzugsweise werden die Störfälle in Klassen eingeteilt, denen Belastungswerte zugeordnet sind, die bei der Prognose des Verlaufs der Gesamtlast PGE berücksichtigt werden.

Das Verfahren erlaubt daher das maschinelle Lernen zur Generierung von Wissen aus Erfahrung, das für die zukünftige Prognose des Verlaufs der Gesamtlast PGE oder PSOE angewendet werden kann. Die gesammelten Erfahrungen und die aktuellen und/oder prognostizierten Einflussgrössen können vorteilhaft auch in einem künstlichen neuronalen Netzwerk verarbeitet werden, um den Verlauf der Gesamtlast PGE oder PSOE optimal zu prognostizieren.

Der für den folgenden Tag prognostizierte Verlauf der Gesamtlast PGE erlaubt es nun, anhand von Vergleichswerten oder Schwellwerten th, th1, th2 Lastspitzen zu detektieren. Dabei können fixe Schwellwerte th1, th2 und/oder variable Schwellwerte th eingesetzt werden. Fixe Schwellwerte th1, th2 können je nach Tageszeit zugeschaltet werden. Im vorliegenden Ausführungsbeispiel wird von 00:00 Uhr bis 12:00 Uhr der tiefere erste Schwellwert th1 und von 12:00 Uhr bis 24:00 Uhr der höhere zweite Schwellwert th2 angewendet, um Lastspitzen zu detektieren. Mittels des ersten Schwellwerts th1 wird im Zeitbereich um 08:00 Uhr ein ersten Schwellwert LS1 und mittels des zweiten Schwellwerts th2 werden im Zeitbereich um 18:00 Uhr die Lastspitzen LS2, LS3 und LS4 detektiert.

Nach der Detektion der Lastspitzen LS1, ..., LS4 wird in der Folge mit einer bestimmten Vorlaufzeit je ein Steuersignal cs1, ..., cs4 erzeugt, mittels dessen Lasten bzw. Betriebseinheiten der Betriebsvorrichtung abgeschaltet werden oder der Energierechner REN des Energieversorgungssystems angesteuert wird, um die für die Lastspitzen LS1, ..., LS4 benötigte Energie bereitzustellen.

Vorzugsweise wird ein variabler oder adaptiver Schwellwert th angewendet, der in Abhängigkeit

a) der Tageszeit, und/oder

b) des prognostizierten Verlaufs der Gesamtlast PGE, und/oder

c) des Energiepreises EP, und/oder

d) der vorhandenen Energiereserven, und/oder

e) des für diesen Zeitpunkt prognostizierten Werts WPGE der Gesamtlast PGE

gewählt wird.

Besonders vorteilhaft gelingt dies, indem der prognostizierte Verlauf der Grundlast PSOE verwendet und mit einem Offset versehen wird. Vorzugsweise wird ein Offset derart vorgesehen, dass eine Bandbreite B resultiert, innerhalb der das prognostizierte Lastrauschen PRE erfolgt.

$$th = WPGE + B$$

Der Offset bzw. die Bandbreite B kann ein Produkt von mehreren Faktoren sein.

$$B = k * 1/EP * 1/WPGE$$

Höhere Energiekosten und höhere Werten der prognostizierten Gesamtlast PGE führen daher vorzugsweise zu einer geringeren Bandbreite.

Bei der Verwendung eines variablen oder adaptiven Schwellwerts th können Lastspitzen LS1, ..., LS4 daher besonders einfach, präzise und vollständig erfasst werden.

Die Vorlaufzeit, mit der das Überschreiten der Schwellwerte th, th1, th2 bzw. das Auftreten von Lastspitzen LS1, ..., LS4 vom Lastrechner RL gemeldet wird, wird derart gewählt, dass die erforderlichen Massnahmen, eine Laststeuerung gegebenenfalls Lastabschaltungen oder die Bereitstellung von Energie, rechtzeitig durchgeführt werden können. Für grössere und länger dauernde Lastspitzen wird vorzugsweise eine grössere Vorlaufzeit gewählt.

Vorzugsweise wird die Wahl der Massnahmen von der Art der Lastspitzen LS1, ..., LS4 abhängig gemacht. Dabei wird vorgesehen, dass für eine kürzere Dauer von Lastspitzen Massnahmen ergriffen werden, z.B. die Abschaltung von Heizungen, die zu keinen Eingriffen in den Betriebsablauf führen. Vorzugsweise wird erst bei sehr hohen Lastspitzen und lange andauernden Lastspitzen in den Bahnbetrieb eingegriffen.

Fig. 6a zeigt das Betriebsnetz BN, aus dem Lastdaten einem Lastrechner RL zugeführt werden, der Daten mit einem Betriebsrechner RBN, einem Planungsrechner RP und einem Energierechner REN austauscht. Die Lastdaten können dem Lastrechner RL vom Betriebsrechner RBN oder vom Energierechner REN zugeführt werden.

Fig. 6b zeigt den bis etwa 10:30 Uhr registrierten Verlauf der Gesamtlast des Betriebsnetzes BN der Eisenbahnanlage EA, aus dem in Echtzeit die Phasenlagen und/oder die Amplituden oder Leistungen der Grundlast PS0 gemäss Fig. 4b und der relevanten Lastschwingungen PS1, PS2 gemäss Fig. 4c und Fig. 4d sowie die Amplitude oder Leistung des Lastrauschens PR gemäss Fig. 4e ermittelt werden, um Korrekturmassnahmen einleiten zu können. Sofern innerhalb der Betriebsvorrichtung bzw. der Eisenbahnanlage EA Taktverschiebungen auftreten, Amplituden einzelner Lastkomponenten PS0, PS1, PS2 sich ändern, oder ein höheres Lastrauschen PR auftritt, wird dies frühzeitig erkannt, sodass der prognostizierte Verlauf der Gesamtlast PGE korrigiert werden kann bzw. ein korrigierter prognostizierte Verlauf der Gesamtlast PGEK gebildet werden kann. Da sich die Lastspitzen bei einer gegenseitigen Verschiebung der Lastkomponenten PS1, PS2 signifikant ändern können, erlaubt dies eine weitere wichtige Präzisierung der Lastmanagementmassnahmen.

Die Laststeuerung bzw. die Steuerung der Betriebseinheiten zur Reduktion oder Vermeidung prognostizierter Lastspitzen erfolgt zentral oder dezentral. Der Lastrechner RL teilt dem Betriebsrechner RBN z.B. die Grösse und Länge der Lastspitzen mit, wonach der Betriebsrechner RBN stationäre oder mobile Betriebseinheiten BNE ermittelt, die erfindungsgemäss gesteuert werden sollen. Vorzugsweise sind die stationären oder mobilen Betriebseinheiten BNE dafür ausgelegt, in einer von vorzugsweise mehreren Betriebsarten betrieben zu werden, in denen unterschiedliche Leistungsaufnahmen vorliegen. In diesem Fall kann der Betriebsrechner RBN einem dezentralen Rechner z.B. einem Fahrzeugrechner die gewünschte Betriebsart vorgeben, wonach der Fahrzeugrechner die unter seiner Kontrolle stehenden Betriebseinheiten BNE steuert.

Das erfindungsgemässe Verfahren zur Überwachung und Steuerung des Betriebsnetzes BN einer Betriebsvorrichtung wurde mit Bezug auf eine Eisenbahnanlage EA beschrieben. Betriebsvorrichtungen können jedoch beliebige Vorrichtungen umfassen, in denen elektrische Lasten, insbesondere Maschinen, betrieben werden. Das Verfahren kann in Produktionsstätten oder Anlagen eingesetzt werden, in denen periodisch höhere Lasten auftreten bzw. Prozesse periodisch ablaufen.

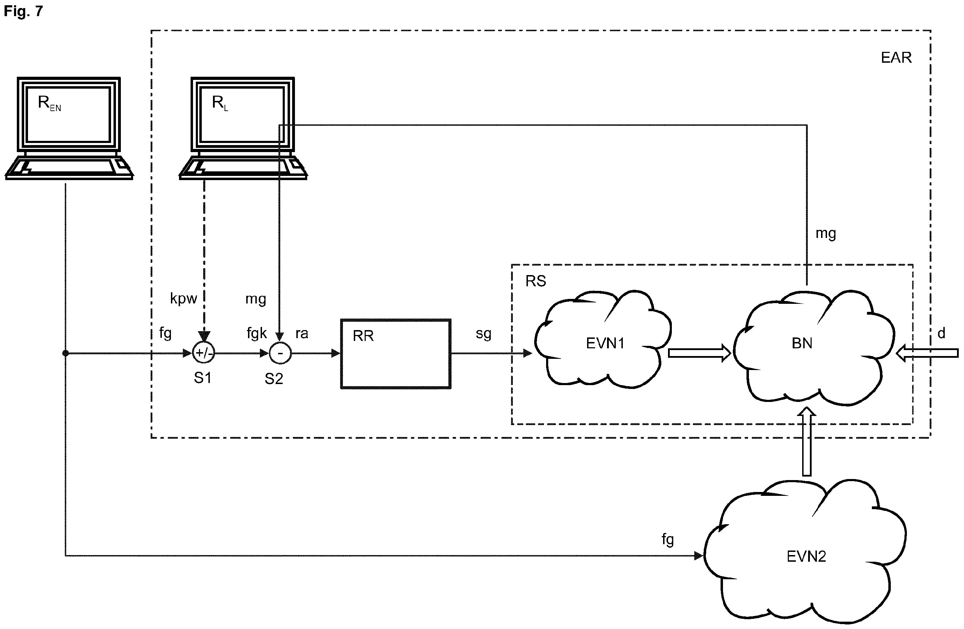

Fig. 7 zeigt die Steuerung eines externen Energieversorgungssystems EVN2 sowie die Regelung eines internen Energieversorgungssystems EVN1 mittels eines Regelkreises EAR. Das externe Energieversorgungssystem EVN2 wird vom Energierechner REN gesteuert, um den Grundbedarf der Energie der Betriebsvorrichtung bzw. der Eisenbahnanlage EA zu decken. Z.B. wurde zwischen dem Betreiber der Betriebsvorrichtung BN und dem Betreiber des zweiten Energieversorgungssystems EVN2 die Lieferung von Energie entsprechend dem durchschnittlichen Energiebedarf der Betriebsvorrichtung BN vereinbart. Um von diesem vereinbarten Energiebezug vom zweiten Energieversorgungssystem EVN2 nicht abzuweichen, wird das interne Energieversorgungssystem EVN gesteuert und/oder geregelt. Sofern Abweichungen vom Grundbedarf auftreten, die in Fig. 7 symbolisch als Störgrössen d gezeigt sind, soll ein zusätzlicher Energiebedarf nicht durch teure Energie aus dem externen Energieversorgungssystem EVN2 sondern durch kostengünstige Energie aus dem ersten Energieversorgungssystem EVN1 gedeckt werden. Z.B. tritt eine Kaltfront als Störgrösse auf, welche das Zuschalten von Heizungen in der Betriebsvorrichtung zur Folge hat.

Dem in Fig. 7 gezeigten Regelkreis EAR wird dazu eine der Grundlast entsprechende Führungsgrösse fg zugeführt, die mit einer aus der Betriebsvorrichtung BN gewonnenen Messgrösse mg verglichen wird, die dem aktuell gemessenen Energiebedarf entspricht, um eine Regelabweichung ra zu bilden, die einem Regler RR zugeführt wird, welcher eine Stellgrösse sg an das interne Energieversorgungssystem EVN1 abgibt. Wie oben beschrieben wurde, wird der aktuelle Energiebedarf in der Betriebsvorrichtung BN vorzugsweise vom Lastrechner RL erfasst, der dem Regelkreis EAR somit die Messgrösse mg zur Verfügung stellen kann.

Aufgrund der Welligkeit des Energiebedarfs können im Regelkreis EAR starke Ausschläge der Stellgrösse sg auftreten, die unerwünscht sind, z.B. weil das externe Energieversorgungssystem EVN2 kurzzeitige Abweichungen toleriert. Alternativ kann das zweite Energieversorgungssystem EVN2 solche Fälligkeiten gerade nicht tolerieren.

Sofern die Welligkeit des Energiebedarfs in einem gewissen Rahmen vom externen Energieversorgungssystem EVN2 toleriert wird, so kann ein der Welligkeit entsprechen Korrektursignal kpw zur Führungsgrösse fg addiert werden, sodass eine Änderung des Energiebedarfs im Rahmen der Welligkeit nur eine geringe Änderung der Stellgrösse sg hervorruft.

Sofern die Welligkeit vom externen Energieversorgungssystemen EVN2 hingegen nicht toleriert wird, so kann das der Welligkeit entsprechende Korrektursignal kpw von der Führungsgrösse fg subtrahiert werden, sodass eine Änderung des Energiebedarfs im Rahmen der Welligkeit verzögerungslos eine Änderung der Stellgrösse sg hervorruft.

Das der Welligkeit entsprechende Korrektursignal kpw bildet dabei eine vorausschauende Regelabweichung, die Änderungen der Stellegrösse sg vorausschauend beeinflussen kann, um eine gewünschte Steuerung des lokalen Energieversorgungssystems EVN1 zu bewirken.

Vorzugsweise wird anhand einer oder mehrerer miteinander summierte Lastkomponenten PS1, PS2 für eine oder mehrere Regelungsperioden RP ein gleichanteilsfreies Welligkeitssignal kpw gebildet wird, unter Berücksichtigung dessen das erste oder das zweite Energieversorgungssystem EVN1, EVN2 gesteuert und/oder geregelt wird, das Teil der Regelstrecke RS des Regelkreises EAR ist.

Fig. 8 zeigt aus dem exemplarischen Verlauf der Gesamtlast PG, PGG z.B. von Fig. 4a extrahierte Verläufe von Lastschwingungen PS1, PS2, die eine Periodendauer von 15 bzw. 30 Minuten aufweisen. Ferner ist der Mittelwert PM15 der Summe dieser Lastschwingungen PS1 und PS2 jeweils für eine Periodendauer von 15 Minuten gezeigt. Durch Summierung der Lastschwingungen PS1, PS2 und Subtraktion des Mittelwert PM15 wird die Welligkeit der Gesamtlast PG für diese beiden Lastschwingungen PS1, PS2 bzw. einen aus den drei genannten Signalverläufen PS1, PS2, PM15 gebildeten Korrekturverlauf kpw gebildet, der keinen Gleichanteil aufweist. Dieser Korrekturverlauf kpw wird in den Regelkreis EAR von Fig. 7 eingespeist und bildet eine vorausschauende Regelabweichung.

Literaturverzeichnis

[1] J. Bosch, J.M. Aniceto, Potenziale für das Lastmanagement im Bahnenergiesystem, eb - Elektrische Bahnen, Ausgabe 2, 2013

2] J. Bosch, Frequenzkomponenten des Bahnstromlastgangs - Zusammenhänge mit dem Bahnbetrieb, eb - Elektrische Bahnen, Ausgabe 4, 2014,

[3] EP2505416A1

[4] EP2799307A1

[5] JPH0516808

**Patentansprüche**

1. Verfahren zur Steuerung oder Regelung einer Betriebsvorrichtung, insbesondere einer Eisenbahnanlage, die von einem Betriebsnetz (BN), das mit wenigstens einem Energieversorgungssystem (EVN1, EVN2) verbunden ist, gespeist wird, zur Einhaltung eines erwünschten Lastverlaufs innerhalb des Betriebsnetzes (BN), insbesondere zur Vermeidung oder Kompensation von Lastspitzen, mit einem Lastrechner (RL), **dadurch gekennzeichnet, dass**

   a) dem Lastrechner (RL) die Daten des Verlaufs der im Betriebsnetz (BN) auftretenden Gesamtlast (PG) zugeführt werden,
   b) aus der Gesamtlast (PG) mehrere Verläufe von Lastkomponenten (PSO, PS1, PS2) ermittelt werden;
   c) der zukünftige Verlauf (PSOE, PS1E, PS2E) für jede der Lastkomponenten (PSO, PS1, PS2) ermittelt wird;
   d) die für die Lastkomponenten (PSO, PS1, PS2) ermittelten zukünftigen Verläufe (PSOE, PS1E, PS2E) einander überlagert werden, um einen zukünftigen Verlauf (PGE) der Gesamtlast (PG) und zukünftige Lastspitzen zu ermitteln; und
   e) die Betriebsvorrichtung und/oder das wenigstens eine Energieversorgungssystem (EVN1, EVN2) unter Berücksichtigung des ermittelten zukünftigen Verlaufs (PGE) der Gesamtlast (PG) und vorgegebener Lastgrenzen gesteuert oder geregelt wird, um zukünftige Lastspitzen zu vermeiden oder die dafür benötigte Energie bereitzustellen,

   wobei zur Ermittlung der Lastkomponenten (PSO, PS1, PS2) innerhalb des Verlaufs der Gesamtlast (PG), gegebenenfalls des gemittelten Gesamtlastverlaufs (PGG), rekursiv auftretende Signalanteile und/oder periodisch auftretende Signalanteile ermittelt werden.

2. Verfahren nach Anspruch 1, **dadurch gekennzeichnet, dass** Lastverläufe innerhalb mehrerer Tage registriert und einander überlagert werden, um einen gemittelten Gesamtlastverlauf (PGG) zu bestimmen und/oder dass der zukünftige Verlauf (PGE) der Gesamtlast (PG) mit wenigstens einem festen oder variablen Schwellwert (th, th1, th2) verglichen wird, um zukünftige Lastspitzen zu ermitteln, die den jeweiligen Schwellwert (th1, th2) überschreiten.

3. Verfahren nach Anspruch 1 oder 3, **dadurch gekennzeichnet, dass** zur Ermittlung der Lastkomponenten (PSO, PS1, PS2) innerhalb des Verlaufs der Gesamtlast (PG), gegebenenfalls des gemittelten Gesamtlastverlaufs (PGG),

   a) periodisch auftretende Signalanteile ermittelt und mittels einer Fourier-Transformation aus dem gegebenenfalls gemittelten Gesamtlastverlauf (PG, PGG) extrahiert werden; und/oder
   b) die Höhe des Rauschanteils als weitere Lastkomponente (PR) ermittelt wird.

4. Verfahren nach Anspruch 3, **dadurch gekennzeichnet, dass** der Verlauf der Grundlast (PSO) durch Filterung des Verlaufs der Gesamtlast (PG), gegebenenfalls des gemittelten Gesamtlastverlaufs (PGG), ermittelt wird und/oder dass zur Ermittlung der Lastkomponenten (PS1, PS2) periodisch auftretende Signalanteile ermittelt werden, die zu Betriebstakten, wie Fahrplan-Takten, korrespondieren, mit denen die Betriebsvorrichtung bzw. die Eisenbahnanlage (EA) betrieben werden.

5. Verfahren nach einem der Ansprüche 1 - 4, **dadurch gekennzeichnet, dass** Daten interner Einflüsse auf den Verlauf der Gesamtlast (PG), wie Betriebsdaten der Betriebsvorrichtung, Störungsmeldungen, Fahrplandaten und Fahrplanänderungen, ausgewertet und entsprechende Belastungsänderungen ermittelt und bei der Bestimmung des zukünftigen Verlaufs (PGE) der Gesamtlast (PG) berücksichtigt werden und/oder dass Daten externer Einflüsse auf den Verlauf der Gesamtlast (PG), wie Daten und Prognosen klimatischer Einflüsse und Einflussänderungen, ermittelt, ausgewertet und entsprechende Belastungsänderungen ermittelt und bei der Bestimmung des zukünftigen Verlaufs (PGE) der Gesamtlast (PG) berücksichtigt werden.

6. Verfahren nach einem der Ansprüche 1 - 5, **dadurch gekennzeichnet, dass** der aktuelle Verlauf der Gesamtlast (PG) ausgewertet und die aktuellen Verläufe der Lastkomponenten (PSO, PS1, PS2) ermittelt und mit den ermittelten zukünftigen Verläufen (PSOE, PS1E, PS2E) der Lastkomponenten (PSO, PS1, PS2) verglichen werden, wonach die zukünftigen Verläufe (PSOE, PS1E, PS2E) der Lastkomponenten (PSO, PS1, PS2) entsprechend geändert und erst dann einander überlagert werden, um den zukünftigen Verlauf (PGE) der Gesamtlast (PG) zu ermitteln; wobei vorzugsweise Phasenverschiebungen und/oder Amplitudenänderungen der aktuellen Verläufe der Lastkomponenten (PSO, PS1, PS2) ermittelt und die zukünftigen Verläufe (PSOE, PS1E, PS2E) der Lastkomponenten (PSO, PS1, PS2) entsprechend geändert werden.

7. Verfahren nach Anspruch 5 oder 6, **dadurch gekennzeichnet, dass** die Änderung der Höhe des Rauschanteils (PR) ermittelt und der zukünftige Verlauf (PGE) der Gesamtlast (PG) entsprechend angepasst wird, vorzugsweise proportional zur Höhe des Rauschanteils (PR) angehoben oder abgesenkt wird.

8. Verfahren nach einem der Ansprüche 1 - 7, **dadurch gekennzeichnet, dass** für zwei oder mehrere Bereiche des zukünftigen Verlaufs (PGE) der Gesamtlast (PG) je ein Schwellwert (th, th1, th2) vorgesehen wird, um zukünftige Lastspitzen zu ermitteln, die den jeweiligen Schwellwert (th1, th2) überschreiten, wobei vorzugsweise ein dem Verlauf der Grundlast (PSO) angepasster und von diesem um einen vorzugsweise konstanten Offset beanstandeten Schwellwertverlauf (th) angewendet wird.

9. Verfahren nach einem der Ansprüche 1 - 8, **dadurch gekennzeichnet, dass** für das Auftreten von prognostizierten Lastspitzen, welche den zugehörigen Schwellwert (th1, th2) überschreiten Steuersignale mit einer Vorlaufzeit generiert werden, die es erlaubt, vor Auftreten der Lastspitzen einzelne Betriebseinheiten der Betriebsvorrichtung oder das wenigstens eine Energieversorgungssystem (EVN1, EVN2) derart zu steuern, dass prognostizierte Lastspitzen vermieden werden oder die für die Lastspitzen benötigte Energie vor Eintreten der Lastspitzen bereit gestellt wird.

10. Verfahren nach einem der Ansprüche 1 - 9, **dadurch gekennzeichnet, dass** zur Vermeidung der prognostizierten Lastspitzen vor Eintreten derselben

    a) einzelne Betriebseinheiten der Betriebsvorrichtung abgeschaltet oder in der Leistungsaufnahme reduziert oder mit einer zeitlichen Verschiebung betrieben werden; und/oder
    b) kinetische Energie von Betriebseinheiten in das Betriebsnetz (BN) zurückgespeist wird, und/oder
    c) das wenigstens eine Energieversorgungssystem (EVN1, EVN2) derart gesteuert wird, dass die für die prognostizierten Lastspitzen benötigte Energie bereitgestellt wird.

11. Verfahren nach einem der Ansprüche 1 - 10, **dadurch gekennzeichnet,**

    **dass** anhand einer oder mehrerer miteinander summierte Lastkomponenten (PS1, PS2) für eine oder mehrere Regelungsperioden (RP) ein gleichanteilsfreies Welligkeitssignal (kpw) gebildet wird, unter Berücksichtigung dessen das wenigstens eine Energieversorgungssystem (EVN1, EVN2) gesteuert oder geregelt wird; oder
    **dass** anhand einer oder mehrerer miteinander summierte Lastkomponenten (PS1, PS2) für eine oder mehrere Regelungsperioden (RP) ein gleichanteilsfreies Welligkeitssignal (kpw) gebildet wird, unter Berücksichtigung dessen ein erstes Energieversorgungssystem (EVN1) gesteuert oder geregelt wird, das Teil der Regelstrecke (RS) eines Regelkreises (EAR) ist, mittels dessen Energieabweichungen von einer Grundlast abgedeckt werden, die von einem zweiten Energieversorgungssystem (EVN2) getragen wird.

12. Verfahren nach einem der Ansprüche 11, **dadurch gekennzeichnet, dass** dem Regelkreis (EAR) eine der Grundlast entsprechende Führungsgrösse (fg) zugeführt wird, der das Welligkeitssignal (kpw) überlagert wird, um eine korrigierte Führungsgrösse (fgk) zu bilden, die mit einer aus der Betriebsvorrichtung gewonnenen Messgrösse (mg) verglichen wird, die dem aktuellen Energiebedarf entspricht, um eine Regelabweichung (ra) zu bilden, die einem Regler (RR) zugeführt wird, welcher eine Stellgrösse (sg) an das geregelte erste Energieversorgungssystem (EVN1) abgibt.

13. Betriebsvorrichtung, insbesondere Vorrichtung zum Betrieb von Eisenbahnen, die von einem Energieversorgungssystem über ein Betriebsnetz (BN) gespeist werden, mit einem Lastrechner (RL), dem die Daten des Verlaufs der in der Betriebsvorrichtung auftretenden Gesamtlast zuführbar sind und der ein Programm aufweist, mittels dessen die Betriebsvorrichtung nach einem Verfahren gemäss einem der Ansprüche 1 - 12 überwachbar und steuerbar ist, wobei der Lastrechner (RL) über Datenkanäle mit einem Betriebsrechner (RBN), mittels dessen Betriebseinheiten (BNE) der Betriebsvorrichtung steuerbar sind, und/oder mit einem Energierechner (REN) verbunden ist, mittels dessen das Energieversorgungssystem steuerbar ist.

14. Betriebsvorrichtung nach Anspruch 13, **dadurch gekennzeichnet, dass** der Lastrechner (RL) über Datenkanäle mit einem Planungsrechner (RP) verbunden ist, aus dem Daten, insbesondere Fahrplandaten, für den zukünftigen Betrieb der Betriebsvorrichtung abrufbar sind.

## Claims

1. Method for controlling or regulating an operating device, in particular of a railway system, which is fed by an operating network (BN) that is connected to at least one energy supply system (EVN1, EVN2), in order to maintain a desired load profile within the operating network (BN), in particular to avoid or compensate for load peaks, with a load calculator (RL), **characterised in that**

   a) the load calculator (RL) is provided with the data of the course of the total load (PG) occurring in the operating network (BN),
   b) several courses of load components (PSO, PS1, PS2) are determined from the total load (PG);
   c) the future course (PSOE, PS1E, PS2E) is determined for each of the load components (PSO, PS1, PS2);
   d) the future courses (PSOE, PS1E, PS2E) determined for the load components (PSO, PS1, PS2) are superimposed to determine a future course (PGE) of the total load (PG) and future load peaks; and
   e) the operating device and/or the at least one energy supply system (EVN1, EVN2) is controlled or regulated under consideration of the determined future course (PGE) of the total load (PG) and predefined load limits in order to avoid future load peaks or to provide the energy required therefor,

   wherein in order to determine the load components (PSO, PS1, PS2) within the course of the total load (PG), possibly the averaged total load course (PGG), recursively occurring signal components and/or periodically occurring signal components are determined.

2. Method according to claim 1, **characterised in that** load courses are registered during several days and are superimposed to determine an averaged total load course (PGG) and/or that the future course (PGE) of the total load (PG) is compared with at least one fixed or variable threshold (th, th1, th2) to determine future load peaks exceeding the respective threshold (th1, th2).

3. Method according to claim 1 or 3, **characterised in that** for determining the load components (PSO, PS1, PS2) within the course of the total load (PG), optionally the averaged total load course (PGG),

   a) periodically occurring signal components are determined and extracted by means of a Fourier transformation from the possibly averaged total load course (PG, PGG); and/or
   b) the level of the noise component is determined as a further load component (PR).

4. Method according to claim 3, **characterised in that** the course of the base load (PSO) is determined by filtering the course of the total load (PG), optionally the averaged total load course (PGG) and/or that for determining the load components (PS1, PS2) periodically occurring signal components are determined, which correspond to operating clocks, such as timetable clocks, with which the operating device or the railway installation (EA) is operated.

5. Method up 1 - 4, **characterised in that** data of internal influences on the course of the total load (PG), such as operating data of the operating device, fault messages, timetable data and timetable changes, are evaluated and corresponding load changes are determined and taken into account in the determination of the future course (PGE) of the total load (PG) and/or that data of external influences on the course of the total load (PG), such as data and forecasts of climatic influences and changes in influence, are determined, evaluated and corresponding load changes are determined and taken into account in the determination of the future course (PGE) of the total load (PG).

6. Method according to one of the claims 1 - 5, **characterised in that** the current course of the total load (PG) is evaluated and the current courses of the load components (PSO, PS1, PS2) are determined and compared with the determined future courses (PSOE, PS1E, PS2E) of the load components (PSO, PS1, PS2), whereafter the future courses (PSOE, PS1E, PS2E) of the load components (PSO, PS1, PS2) are changed accordingly and only then superimposed to determine the future course (PGE) of the total load (PG); whereby preferably phase shifts and/or amplitude changes of the current courses of the load components (PSO, PS1, PS2) are determined and the future courses (PSOE, PS1E, PS2E) of the load components (PSO, PS1, PS2) are changed accordingly.

7.  Method according to claim 5 or 6, **characterised in that** the change in the level of the noise component (PR) is determined and the future course (PGE) of the total load (PG) is adjusted accordingly, preferably raised or lowered proportionally to the level of the noise component (PR).

8.  Method according to one of the claims 1 - 7, **characterised in that** a threshold (th, th1, th2) is provided for each of two or more ranges of the future course (PGE) of the total load (PG) in order to determine future load peaks which exceed the respective threshold (th1, th2), whereby a threshold value curve (th) is preferably applied which is adapted to the curve of the base load (PSO) and which is offset therefrom by a preferably constant offset.

9.  Method according to one of the claims 1 - 8, **characterised in that**, for the occurrence of predicted load peaks which exceed the associated threshold (th1, th2), control signals are generated with a lead time which allows individual operating units of the operating device or the at least one energy supply system (EVN1, EVN2) to be controlled before the occurrence of the load peaks in such a way that predicted load peaks are avoided or the energy required for the load peaks is provided before the load peaks occur.

10. Method according to one of the claims 1 - 9, **characterised in that** to avoid the predicted load peaks before they occur

    a) individual operating units of the operating device are switched off or their power consumption is reduced or they are operated with a time delay; and/or
    b) kinetic energy from operating units is fed back into the operating network (BN), and/or
    c) on the basis of one or more load components (PS1, PS2) summed with one another, a DC-free waviness signal (kpw) is formed for one or more control periods (RP), in consideration of which the at least one energy supply system (EVN1, EVN2) is controlled or regulated.

11. Method according to one of the claims 1 - 10, **characterised in,**

**that** on the basis of one or more load components (PS1, PS2) summed with one another, a DC-free waviness signal (kpw) is formed for one or more control periods (RP), under consideration of which the at least one energy supply system (EVN1, EVN2) is controlled or regulated; or **that** on the basis of one or more load components (PS1, PS2) summed with one another, a DC-free waviness signal (kpw) is formed for one or more control periods (RP), under consideration of which a first energy supply system (EVN1) is controlled or regulated, which is part of the controlled system (RS) of a control loop (EAR), by means of which energy deviations from a base load, which is supported by a second energy supply system (EVN2), are covered.

12. Method according to one of the claims 11, **characterised in that** the control loop (EAR) is supplied with a command variable (fg) corresponding to the base load, to which the waviness signal (kpw) is superimposed in order to form a corrected command variable (fgk), which is compared with a measured variable (mg) obtained from the operating device, which corresponds to the current energy demand, in order to form a control deviation (ra), which is supplied to a controller (RR), which outputs a control value (sg) to the controlled first energy supply system (EVN1).

13. Operating device, in particular device for operating trains which are fed by an energy supply system via an operating network (BN), with a load calculator (RL) to which the data of the course of the total load occurring in the operating device are feedable and which comprises a program by means of which the operating device can be monitored and controlled according to a method according to one of claims 1 - 12, wherein the load calculator (RL) is connected via data channels to an operating computer (RBN), by means of which operating units (BNE) of the operating device are controllable, and/or to an energy computer (REN), by means of which the energy supply system is controllable.

14. Operating device according to claim 13, **characterised in that** the load calculator (RL) is connected via data channels with a planning computer (RP) from which data, in particular timetable data, for the future operation of the operating device can be retrieved.

**Revendications**

1.  Procédé de commande ou de régulation d'un dispositif d'actionnement, notamment d'une installation ferroviaire, alimenté par un réseau d'actionnement (BN) relié à au moins un système d'alimentation en énergie (EVN1, EVN2), pour maintenir une courbe de charge souhaitée au sein du réseau d'actionnement (BN), en particulier pour éviter ou compenser des pics de charge, avec un calculateur de charge (RL), **caractérisé en ce que**

a) que le calculateur de charge (RL) est alimenté par les données de la courbe de la charge totale (PG) apparaissant dans le réseau d'actionnement (BN),

b) plusieurs courbes de composantes de charge (PSO, PS1, PS2) sont déterminées à partir de la charge totale (PG) ;

c) la future courbe (PSOE, PS1E, PS2E) est déterminée pour chacune des composantes de charge (PSO, PS1, PS2);

d) les courbes futures (PSOE, PS1E, PS2E) déterminées pour les composantes de charge (PSO, PS1, PS2) sont superposées les unes aux autres afin de déterminer une courbe future (PGE) de la charge totale (PG) et des pics de charge futurs; et

e) le dispositif d'actionnement et/ou le au moins un système d'alimentation en énergie (EVN1, EVN2) est commandé ou régulé en tenant compte de la future courbe (PGE) déterminée de la charge totale (PG) et de limites de charge prédéfinies, afin d'éviter de futurs pics de charge ou de mettre à disposition l'énergie nécessaire à cet effet,

dans lequel, pour déterminer les composantes de charge (PSO, PS1, PS2) à l'intérieur de la courbe de charge totale (PG), éventuellement de la courbe de charge totale moyenne (PGG), des composantes de signal apparaissant de manière récursive et/ou des composantes de signal apparaissant de manière périodique sont déterminées.

**2.** Procédé selon la revendication 1, **caractérisé en ce que** des courbes de charge sont enregistrées en l'espace de plusieurs jours et superposées les unes aux autres pour déterminer une courbe de charge totale moyenne (PGG) et/ou en ce que la courbe future (PGE) de la charge totale (PG) est comparée à au moins une valeur de seuil fixe ou variable (th, th1, th2) pour déterminer des pics de charge futurs qui dépassent la valeur de seuil respective (th1, th2).

**3.** Procédé selon la revendication 1 ou 3, **caractérisé en ce que** pour déterminer les composantes de charge (PSO, PS1, PS2) à l'intérieur de la courbe de charge totale (PG), éventuellement de la courbe de charge totale moyenne (PGG),

a) des parties de signal apparaissant périodiquement sont déterminées et extraites de la courbe de charge totale (PG), éventuellement de la courbe de charge totale moyenne (PGG), au moyen d'une transformation de Fourier; et/ou

b) le niveau de bruit est déterminé en tant que composante de charge supplémentaire (PR).

**4.** Procédé selon la revendication 3, **caractérisé en ce que** la courbe de la charge de base (PS0) est déterminée par filtrage de la courbe de la charge totale (PG), éventuellement de la courbe de la charge totale moyenne (PGG), et/ou **en ce que**, pour déterminer les composantes de charge (PS1, PS2), des parties de signal apparaissant périodiquement sont déterminées, qui correspondent à des cadences opérationnelles, telles que des cadences d'horaire, avec lesquelles le dispositif d'actionnement ou l'installation ferroviaire (EA) est opéré.

**5.** Procédé selon une des revendications 1 - 4, **caractérisé en ce que** les données relatives aux influences internes sur la courbe de la charge totale (PG), telles que les données opérationnelles du dispositif d'actionnement, les messages de perturbation, les données d'horaire et les modifications d'horaire, sont évaluées et que les modifications de charge correspondantes sont déterminées et prises en compte lors de la détermination de la future courbe (PGE) de la charge totale (PG) et/ou que les données relatives aux influences externes sur la courbe de la charge totale (PG), telles que les données et les prévisions relatives aux influences climatiques et aux changements d'influence, sont déterminées, évaluées et les changements de charge correspondants sont déterminés et pris en compte lors de la détermination de la future courbe (PGE) de la charge totale (PG).

**6.** Procédé selon une des revendications 1 - 5, **caractérisé en ce que** la courbe actuelle de la charge totale (PG) est évaluée et les courbes actuelles des composantes de charge (PSO, PS1, PS2) sont déterminées et comparées aux courbes futures déterminées (PS0E, PS1E, PS2E) des composantes de charge (PSO, PS1, PS2), après quoi les courbes futures (PS0E, PS1E, PS2E) des composantes de charge (PSO, PS1, PS2) sont modifiées en conséquence et seulement ensuite superposées les unes aux autres pour déterminer la courbe future (PGE) de la charge totale (PG); dans lequel de préférence des déphasages et/ou des modifications d'amplitude des courbes actuelles des composantes de charge (PSO, PS1, PS2) sont déterminés et les courbes futures (PS0E, PS1E, PS2E) des composantes de charge (PS0, PS1, PS2) sont modifiées en accord avec ces déphasages et modifications.

**7.** Procédé selon la revendication 5 ou 6, **caractérisé en ce que** la modification du niveau de la part de bruit (PR) est déterminée et la future courbe (PGE) de la charge totale (PG) est adaptée en conséquence, de préférence augmentée ou diminuée proportionnellement au niveau de la part de bruit (PR).

8. Procédé selon une des revendications 1 - 7, **caractérisé en ce que** pour deux ou plusieurs domaines de la courbe future (PGE) de la charge totale (PG), une valeur de seuil (th, th1, th2) est respectivement prévue pour déterminer des pics de charge futurs qui dépassent la valeur de seuil respective (th1, th2), dans laquelle une courbe de valeur seuil (th) adaptée à la courbe de la charge de base (PS0) et décalée par celle-ci d'un offset de préférence constant est appliquée de préférence.

9. Procédé selon une des revendications 1 - 8, **caractérisé en ce que en ce que**, pour l'apparition de pics de charge pronostiqués qui dépassent la valeur seuil (th1, th2) correspondante, des signaux de commande sont générés avec un temps d'avance qui permet de commander, avant l'apparition des pics de charge, des unités de fonctionnement individuelles du dispositif d'actionnement ou le au moins un système d'alimentation en énergie (EVN1, EVN2) de telle sorte que des pics de charge pronostiqués soient évités ou que l'énergie nécessaire pour les pics de charge soit mise à disposition avant l'apparition des pics de charge.

10. Procédé selon une des revendications 1 - 9, **caractérisé en ce que** pour éviter les pics de charge prévus avant que ces derniers ne se produisent

a) certaines unités opérationnelles du dispositif d'actionnement sont arrêtées ou que leur puissance absorbée est réduite ou qu'elles fonctionnent avec un décalage dans le temps; et/ou
b) l'énergie cinétique des unités opérationnelles est réinjectée dans le réseau d'actionnement (BN), et/ou
c) l'au moins un système d'alimentation en énergie (EVN, EVN2) est commandé de telle sorte que l'énergie nécessaire pour les pics de charge pronostiqués est mise à disposition.

11. Procédé selon une des revendications 1 - 10, **caractérisé en ce que**

à l'aide d'une ou de plusieurs composantes de charge (PS1, PS2) cumulées entre elles, on forme pour une ou plusieurs périodes de régulation (RP) un signal d'ondulation (kpw) sans composante uniforme, en tenant compte duquel le au moins un système d'alimentation en énergie (EVN1, EVN2) est commandé ou régulé; ou
à l'aide d'une ou de plusieurs composantes de charge (PS1, PS2) cumulées entre elles, pour une ou plusieurs périodes de régulation (RP), un signal d'ondulation (kpw) sans composante uniforme est formé, en tenant compte duquel un premier système d'alimentation en énergie (EVN1) est commandé ou régulé, qui fait partie du système de régulation (RS) d'un circuit de régulation (EAR) au moyen duquel les déviations d'énergie sont couvertes à partir d'une charge de base qui est supportée par un deuxième système d'alimentation en énergie (EVN2).

12. Procédé selon une des revendications 11, **caractérisé en ce que** une valeur de commande (fg) correspondant à la charge de base est amenée à la boucle de régulation (EAR), à laquelle est superposé le signal d'ondulation (kpw), pour former une valeur de commande corrigée (fgk), qui est comparée à une valeur de mesure (mg) obtenue à partir du dispositif d'actionnement, correspondant à la demande d'énergie actuelle, pour former un écart de réglage (ra) qui est transmis à un régulateur (RR) qui délivre une valeur de réglage (sg) au premier système d'alimentation en énergie régulé (EVN1).

13. Dispositif d'actionnement, notamment dispositif pour actionner des trains, qui sont alimentés par un système d'alimentation en énergie via un réseau d'actionnement (BN), avec un calculateur de charge (RL) auquel les données de la courbe de la charge totale apparaissant dans le dispositif d'actionnement peuvent être amenées et qui présente un programme au moyen duquel le dispositif d'actionnement peut être surveillé selon un procédé selon l'une des revendications 1 à 12, le calculateur de charge (RL) étant relié par des canaux de données à un ordinateur opérationnel (RBN), au moyen duquel des unités opérationnelles (BNE) du dispositif d'actionnement peuvent être commandées, et/ou à un ordinateur d'énergie (REN), au moyen duquel le système d'alimentation en énergie peut être commandé.

14. Dispositif d'actionnement selon la revendication 13, **caractérisé en ce que** le calculateur de charge (RL) est relié par des canaux de données à un ordinateur de planification (RP), à partir duquel des données, en particulier des données d'horaire, peuvent être appelées pour les opérations futures du dispositif d'actionnement.

Fig. 1

**Fig. 2**

15.12.2014

16.12.2014

17.12.2014

18.12.2014

Gesamtlast im Zeitbereich

$P_G$
$P_{GG}$

$t$

Fourier-Transformation

Gesamtlast im Frequenzbereich

$f$

EP 3 056 379 B1

Fig. 3a

Fig. 3b

21

Fig. 4a

Fig. 4b

Fig. 4c

Fig. 4d

Fig. 4e

EP 3 056 379 B1

**Fig. 5a**

**Fig. 5b**

Fig. 6a

Fig. 6b

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2505416 A1
- EP 2799307 A1
- JP H0516808 B
- JP H0834268 A
- DE 102005056084 A1
- EP 1359049 A1
- GB 2516383 A
- DE 102012103081 A1
- EP 0997340 A1

**In der Beschreibung aufgeführte Nicht-Patentliteratur**

- Potenziale für das Lastmanagement im Bahnenergiesystem, eb. **J. BOSCH ; J.M. ANICETO.** Elektrische Bahnen. 2013
- Frequenzkomponenten des Bahnstromlastgangs - Zusammenhänge mit dem Bahnbetrieb, eb. **J. BOSCH.** Elektrische Bahnen. 2014